# EUROPEAN PATENT SPECIFICATION

(11) **EP 3 544 209 B1**
(45) Date of publication and mention of the grant of the patent: **28.09.2022**
(21) Application number: 19157567.9
(22) Date of filing: 15.02.2019
(51) Int. Cl.: H04B 17/00, H04B 17/11, H04L 1/00, H04W 4/80

(54) **SYSTEM, ELECTRONIC DEVICE, AND TEST METHOD**
SYSTEM, ELEKTRONISCHE VORRICHTUNG UND TESTVERFAHREN
SYSTÈME, DISPOSITIF ÉLECTRONIQUE ET PROCÉDÉ D'ESSAI

(30) Priority: 20.03.2018 JP 2018053406
(43) Date of publication of application: 25.09.2019
(73) Proprietor: Kabushiki Kaisha Toshiba, Minato-ku Tokyo 105-8001 (JP)
(72) Inventor: Tanaka, Koichi, Tokyo 135-0061 (JP); Shishino, Shinichi, Tokyo 135-0061 (JP); Miyairi, Tatsuya, Tokyo 135-0061 (JP); Katsurahara, Ko, Tokyo 135-0061 (JP); Takinami, Masaki, Tokyo 135-0061 (JP); Sato, Hiroyasu, Tokyo 135-0061 (JP); Yoshinaga, Yuji, Tokyo 135-0061 (JP); Yamazaki, Osamu, Tokyo 135-0061 (JP)
(74) Representative: Henkel & Partner mbB

(56) References cited:
- EP-A1- 3 030 039
- WO-A1-2004/054141
- WO-A1-2017/099383

## Description

### FIELD

Embodiments described herein relate generally to a system, an electronic device, and a method that execute a wireless communication test.

### BACKGROUND

Gas meters, electricity meters, water meters, and the like having a short-range wireless communication function transmit the consumption of gas, electric power, water, and the like to servers of a gas company, electric power company, water company, and the like via communication hubs having short-range communication function and wide area communication function. The short-range wireless communication function of various meters (smart meters such as a gas meter and an electricity meter) and the communication hub are configured to mutually execute wireless communication in the 2.4 GHz band.

In accordance with locations where the communication hub and the meter are installed, however, the communication hub and the meter cannot mutually execute wireless communication in the 2.4 GHz band. Thus, a communication hub and a meter capable of wireless communication in a frequency band other than the 2.4 GHz band have been developed.

However, a worker who installs the hub and the meter cannot recognize which frequency band can be used for the hub and the meter to mutually execute wireless communication, before installing them. For this reason, the worker executes a wireless communication test using the communication hub and the meter after actually installing the communication hub and the meter. If the communication hub and the meter are not capable of mutually executing wireless communication, the worker needs to exchange the installed communication hub and the meter with a communication hub and a meter conforming to another frequency band, which may extend the time for installation work. Furthermore, when the meter is installed, supply of gas, electric power, or water needs to be suspended. For this reason, if the installation work takes a longer time, inconvenience in a person provided with gas, electric power, or water is serious.

EP 3 030 039 A1 discloses an electronic device including a first communication circuit configured to perform wireless communication with an external electronic device, based on a first communication protocol in which the wireless communication is possible based on at least one of a first frequency or a second frequency, a processor electrically connected to the communication circuit, and a memory electrically connected to the processor. The memory is configured to store instructions, the instructions, when executed, causing the processor to acquire information associated with at least one of a state or an operation of the electronic device and the first communication to perform the wireless communication selectively based on one of the first frequency or the second frequency, based on at least a part of the acquired information.

### BRIEF DESCRIPTION OF THE DRAWINGS

FIG. 1 is a block diagram showing an exemplary wireless communication test system according to an embodiment in which a communication hub subjected to a wireless communication test is connected to a network.
FIG. 2 is an illustration showing an example of a configuration of the wireless communication test system according to the embodiment.
FIG. 3 is a perspective view showing an example of an appearance of a test device according to the embodiment.
FIG. 4 is a view showing an example of the inside of the test device according to the embodiment as seen from the side.
FIG. 5 is an exemplary circuit block diagram showing the test device according to the embodiment.
FIG. 6A is an exemplary block diagram showing a functional configuration of the wireless communication test system according to the embodiment.
FIG. 6B is an exemplary block diagram showing a functional configuration of an operation terminal of FIG. 6A.
FIG. 6C is an exemplary block diagram showing a functional configuration of a communicator in a service van of FIG. 6A.
FIG. 6D is an exemplary block diagram showing a functional configuration of a test device (initiator device) of FIG. 6A.
FIG. 6E is an exemplary block diagram showing a functional configuration of a test device (beacon device) of FIG. 6A.
FIG. 7A is a table showing an example of a lighting mode of W/B LED provided in the test device according to the embodiment.
FIG. 7B is a table showing an example of a lighting mode of ZB LED provided in the test device according to the embodiment.
FIG. 7C is a table showing an example of a lighting mode of S/P LED provided in the test device according to the embodiment.
FIG. 8 is a sequence diagram showing parts of a pre-test setting operation executed by the wireless communication test system according to the embodiment.
FIG. 9 is a sequence diagram showing remaining parts of the pre-test setting operation executed by the wireless communication test system according to the embodiment.
FIG. 10A is an illustration showing an example of a screen displayed on a display unit of the operation terminal in a case where the pre-test setting operation is executed by the wireless communication test system according to the embodiment.
FIG. 10B is an illustration showing an example of a screen displayed on the display unit in a case where the pre-test setting operation is executed by the wireless communication test system according to the embodiment.
FIG. 10C is an illustration showing an example of a screen displayed on the display unit in a case where the pre-test setting operation is executed by the wireless communication test system according to the embodiment.
FIG. 10D is an illustration showing an example of a screen displayed on the display unit in a case where the pre-test setting operation is executed by the wireless communication test system according to the embodiment.
FIG. 10E is an illustration showing an example of a screen displayed on the display unit in a case where the pre-test setting operation is executed by the wireless communication test system according to the embodiment.
FIG. 11 is a sequence diagram showing a part of operation that relates to a wireless communication test executed by the wireless communication test system according to the embodiment.
FIG. 12 is a sequence diagram showing a remaining part of the operation that relates to the wireless communication test executed by the wireless communication test system according to the embodiment.
FIG. 13A is a diagram showing an example of a screen displayed on the display unit of the operation terminal in a case where operations that relate to the wireless communication test are executed by the wireless communication test system according to the embodiment.
FIG. 13B is a diagram showing an example of a screen displayed on the display unit in a case where operations that relate to the wireless communication test are executed by the wireless communication test system according to the embodiment.
FIG. 13C is a diagram showing an example of a screen displayed on the display unit in a case where operations that relate to the wireless communication test are executed by the wireless communication test system according to the embodiment.
FIG. 13D is a diagram showing an example of a screen displayed on the display unit in a case where operations that relate to the wireless communication test are executed by the wireless communication test system according to the embodiment.
FIG. 13E is a diagram showing an example of a screen displayed on the display unit in a case where operations that relate to the wireless communication test are executed by the wireless communication test system according to the embodiment.
FIG. 13F is a diagram showing an example of a screen displayed on the display unit in a case where operations that relate to the wireless communication test are executed by the wireless communication test system according to the embodiment.
FIG. 13G is a diagram showing an example of a screen displayed on the display unit in a case where operations that relate to the wireless communication test are executed by the wireless communication test system according to the embodiment.
FIG. 13H is a diagram showing an example of a screen displayed on the display unit in a case where operations that relate to the wireless communication test are executed by the wireless communication test system according to the embodiment.
FIG. 14 is a flowchart showing the wireless communication test executed by a test device that is set as an initiator device in the embodiment.
FIG. 15 is a flowchart showing an operation of responding to the wireless communication test in the embodiment, the operation executed by the test device that is set as a beacon device.
FIG. 16 is a sequence diagram showing an operation that relates to updating of contents of the wireless communication test executed by the wireless communication test system according to the embodiment.
FIG. 17 is a sequence diagram showing an operation of acquiring a result of the wireless communication test by the communicator in the service van from the test device that is set as the initiator device in the embodiment.
FIG. 18 is a sequence diagram showing an operation of acquiring a result of the wireless communication test by the communicator in the service van from the operation terminal, in the embodiment.

### DETAILED DESCRIPTION

Various embodiments will be described hereinafter

Accordingly, there is provided a system as set out in independent claim 1, an electronic device as set out in independent claim 14, and a test method as set out in independent claim 15. Advantageous developments are defined in the dependent claims.

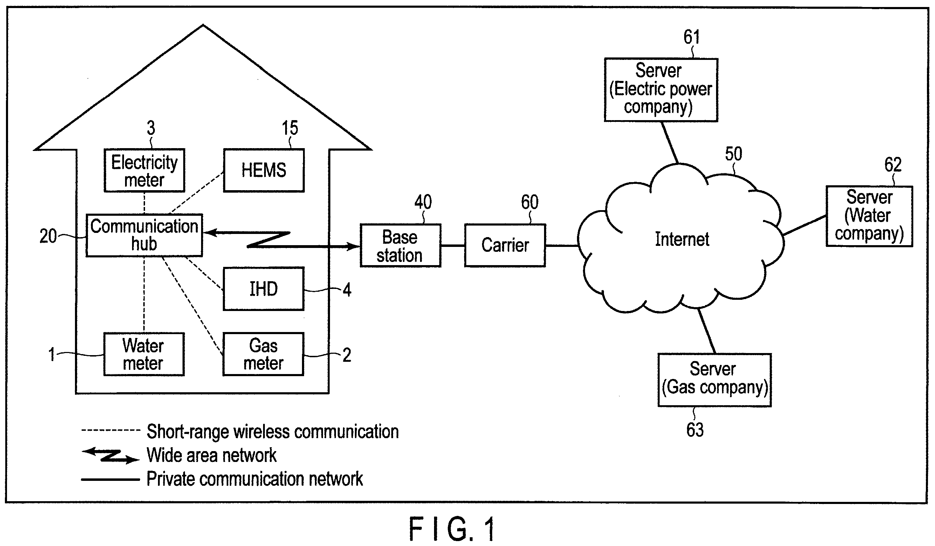

FIG. 1 is a block diagram showing a situation in which a communication hub 20 subjected to a wireless communication test by a test device is connected to a network.

Various meters such as a water meter 1, a gas meter 2, and an electricity meter 3 are installed in each house. Usage data of the water meter 1, usage data of the gas meter 2, and reading data of the electricity meter 3 are transmitted to the communication hub 20 by wireless communication. The communication hub 20 is provided in each house.

More specifically, the water usage data of the water meter 1, gas usage data of the gas meter 2, and reading data of the electricity meter 3 are transmitted from ZigBee (trademark) devices (not shown in FIG. 1) included in the respective meters to the communication hub 20. Then, the water usage data, the gas usage data of the gas meter 2, and the reading data of the electricity meter 3 are received via a ZigBee device (not shown in FIG. 1) provided in the communication hub 20.

The gas meter 2 may be installed outdoors or underground. An in-home display (IHD) 4 is wirelessly connected to the communication hub 20. The in-home display (IHD) 4 is a display device on which the data (the water usage data of the water meter 1, the gas usage data of the gas meter 2, or the reading data of the electricity meter 3) received by the communication hub 20 is displayed. The reading data transmitted from the ZigBee device of the communication hub 20 is received by the ZigBee device (not shown in FIG. 1) provided in the IHD 4.

A home energy management system (HEMS) 15 may be connected to the communication hub 20. The communication hub 20 aggregates meter data wirelessly transmitted from the respective meters, and wirelessly transmits the data to a server 61 of the electric power company, a server 62 of the water company, or a server 63 of the gas company periodically (for example, at intervals of thirty minutes) via the Internet 50. The meter data includes the water usage data of the water meter 1, the gas usage data of the gas meter 2, the reading data of the electricity meter 3, and the like.

In an area where the intensity of radio waves of cellular telephone network is weak (i.e., an area where cellular networks are crowded or an area where radio waves of cellular networks can hardly reach) or in a suburb where cellular telephone network does not exist, a wireless multi-hop system of IEEE 802.15.4g standard may be employed as the system of communication from the communication hub 20 to the Internet 50. The wireless multi-hop system transmits data to a communication hub called a gateway (not shown in FIG. 1) by sequentially multi-hopping of other communication hubs capable of establishing communication. Thus, the smart meters are connected to one smart meter (gateway) in a mesh-like network of the communication hub. A communication hub capable of establishing communication is selected, and a route to the gateway is determined. The gateway is connected to a wireless base station 40 via a cellular telephone line, for example, 2G/3G line or the like. The base station 40 is connected to the server 61 of the electric power company, the server 62 of the water company, and the server 63 of the gas company via a telephone company (called carrier) 60 and the Internet 50.

The carrier 60 obtains meter data from each of the meters via the communication hub 20 and the base station 40. The base station 40 is built by the carrier 60. The carrier 60 obtains the usage data of water from the water meter 1, the usage data of gas from the gas meter 2, and the reading data from the electricity meter 3, by transmitting instructions to the meters via the communication hub 20. The carrier 60 controls the water meter 1, the gas meter 2, or the electricity meter 3 and stops use of electric power, water, or gas in a house that is in arrears with payment, by transmitting instructions to the meters 1, 2, or 3, in response to the request from the electric power company 61, the water company 62 or the gas company 63. The communication hub 20 includes plural, for example, three wireless communication devices, for example, a 2G/3G device, the ZigBee device, and an RF mesh device (a mesh network of IEEE 802.15.4g). Of these devices, the ZigBee device is configured to receive the meter data from various meters, and the 2G/3G device and the RF mesh device are configured to transmit the meter data transmitted from the various meters to the network side. The 2G/3G device executes communication using the cellular telephone line. The RF mesh device is configured to execute multi-hop communication with the meter (communication hub 20) and is mainly employed in the area where the intensity of the radio waves of a cellular telephone line is weak or in a suburb where cellular telephone line does not exist. The communication with the network is not limited to wireless communication but may be communication using power lines. The communication using the power lines are mainly used in condominiums, buildings, and the like. A device used for communication with the network is selected in accordance with the installation environment of the communication hub 20.

The wireless multi-hop system is used for communication between communication hubs in a suburb where the intensity of mobile telephone line is weak or the mobile telephone line does not exist. The communication hub 20 in a range where radio waves of the base station 40 reach may be connected to the base station 40 via the 2G/3G cellular telephone line, directly. Furthermore, communication with the network is not limited to wireless communication, but may be communication using power lines. Communication using the power lines is mainly used in condominiums, buildings, and the like.

The ZigBee device receives the meter data from various meters by mutually executing communication with various meters via an antenna provided in the ZigBee device. The RF mesh device transmits the received meter data to the gateway via an antenna by way of (by hopping) an RF mesh device of the other communication hub 20.

The RF mesh device also forms a wireless mesh network with the other communication hub 20 via the antenna and transmits the meter data to the gateway 30.

Examples of the communication hub 20 include a single-band device and a dual-band device. The single-band device includes a ZigBee device conformable to a single frequency band and mutually executes wireless communication with various meters, and the like in the single frequency band. The dual-band device includes a ZigBee device conformable to two frequency bands, and mutually executes wireless communication with various meters, and the like in any one of the two frequency bands in accordance with situations of the dual-band device such as the distances from various meters, and the like, the communication speed, and ambient noise.

For example, the single-band device includes a ZigBee device capable of executing wireless communication in the 2.4 GHz frequency band. Since 2.4 GHz radio waves have an excellent property of traveling straight and propagation of the 2.4 GHz radio waves is prevented by an obstruction such as a wall, a ZigBee device capable of executing wireless communication in sub-GHz frequency band has been proposed. An example of the sub-GHz frequency band may be any frequency band lower than 1 GHz band. For example, the proposed ZigBee device executes wireless communication in 868 MHz frequency band. In this specification, 868 MHz is used as one example of the sub-GHz frequency band. Other frequencies of MHz may be used as the sub-GHz frequency band. The dual-band device includes, for example, a ZigBee device capable of executing wireless communication in two frequency bands of 2.4 GHz and 868 MHz, and executes wireless communication in either of the frequency bands of 2.4 GHz and 868 MHz. Similarly, examples of various meters (water meter 1, gas meter 2, and electricity meter 3) and the IHD 4 include a single-band device and a dual-band device.

In the following explanations, the single-band device includes a ZigBee device capable of wireless communication in the 2.4 GHz frequency band, and the dual-band device includes a ZigBee device capable of wireless communication in the frequency bands of 2.4 GHz and 868 MHz.

A first single-band device having a ZigBee device capable of wireless communication in the 2.4 GHz frequency band and a second single-band device having a ZigBee device capable of wireless communication in the 868 MHz frequency band may be used instead of the single-band device and the dual-band device.

The worker executes a wireless communication test using test devices explained below, before the communication hub 20, the meters 1, 2, and 3, and the IHD 4 are installed in a building such as a house. Thus, the worker can recognize the frequency band in which the communication hub 20 and the meters 1, 2, and 3, and the communication hub 20 and IHD 4 are capable of mutually executing communication, respectively. The worker can thereby recognize which of the single-band device and the dual-band device should be installed. Currently, devices for the 868 MHz frequency band (the second single-band devices) have not been developed. Therefore, if the frequency band in which the communication hub 20 and meters 1, 2, and 3, and the communication hub 20 and IHD 4 are capable of mutually executing communication, respectively, is 868 MHz, the worker installs the dual-band device.

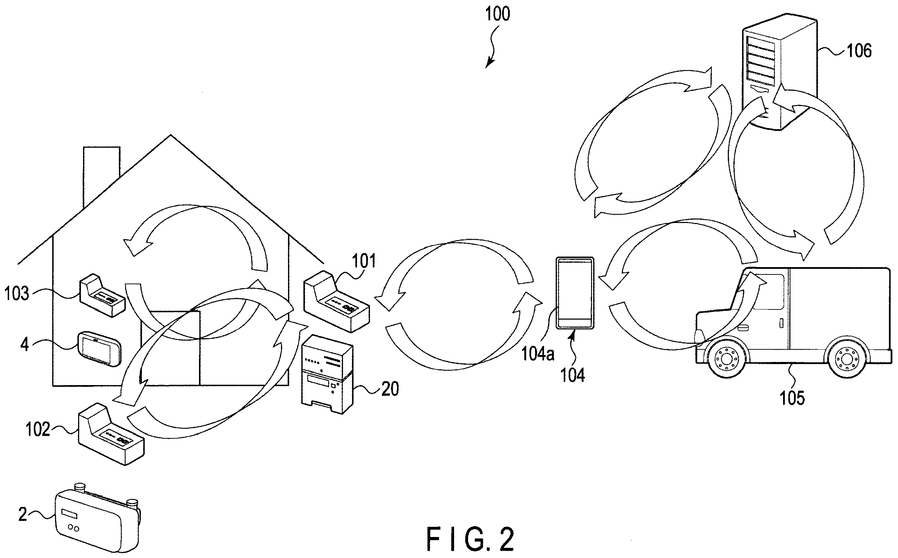

FIG. 2 is an illustration showing an example of a configuration of the wireless communication test system 100.

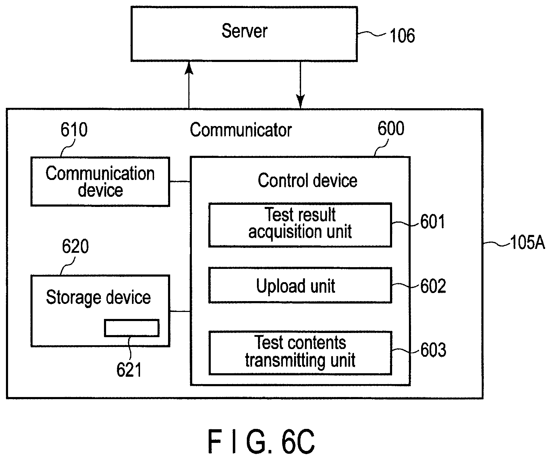

A wireless communication test system 100 includes test devices 101, 102, and 103, an operation terminal 104, a communicator 105A (shown in FIG. 6C) in a service van 105, and a server 106. If the worker executes a pre-test setting operation and the wireless communication test, the communicator 105A in the service van 105 and the server 106 may not be included in the wireless communication test system 100. The pre-test setting operation will be described later.

The test devices 101, 102, and 103 are used to execute the wireless communication tests instead of devices to be tested (gas meter 2, IHD 4, and communication hub 20 in FIG. 2). The water meter 1 and the electricity meter 3 may be the device to be tested. Any one of the test devices 101, 102, and 103 may be used instead of the gas meter 2, the IHD 4, or communication hub 20. The test devices 101, 102, and 103 may have the same configuration. The test devices 101, 102, and 103 may have the same appearance. Each of the test devices 101, 102, and 103 includes a ZigBee device capable of wireless communication in the frequency bands of 2.4 GHz and 868 MHz. When executing the wireless communication test before installment of the gas meter 2, the IHD 4, and the communication hub 20, the worker places the test devices at or near the location where the communication hub 20 is to be installed and at or near the location where the gas meter 2 or the IHD 4 is to be installed. Then, the wireless communication test between the test device placed at or near the location where the communication hub 20 is to be installed and the test device placed at or near the location where the gas meter 2 or the IHD 4 is to be installed, is executed and it can be recognized in which frequency band the communication hub 20 and the gas meter 2 or the IHD 4 can mutually execute wireless communication.

In FIG. 2, the test devices 101, 102, and 103 are arranged at or near the locations where the communication hub 20, the gas meter 2, and the IHD 4 are installed, respectively, and the wireless communication tests between the test devices 101 and 102 and between the test device 101 and the test device 103 are executed. The test device 101 is capable of mutual communication employing ZigBee with the test devices 102 and 103.

The test device 102 is placed at or near the location where the gas meter 2 is to be installed in FIG. 2, but the test device 102 may be placed at or near the location where the water meter 1 is to be installed or the location where the electricity meter 3 is to be installed. Then, the wireless communication test may be executed between the test device 102 and the test device 101 placed at or near a location where the communication hub 20 is to be installed.

An operation terminal 104 is a terminal device such as a smartphone having a wireless communication function, and is capable of Bluetooth (registered trademark) communication and Wi-Fi (registered trademark) communication with the test devices 101, 102, and 103, Bluetooth communication and Wi-Fi communication with the communicator 105A in the service van 105, and 3G/LTE communication with the server 106.

The operation terminal 104 is carried by the worker who installs the communication hub 20, the meters 1, 2, and 3, and the IHD 4. The operation terminal 104 executes device mode settings of the test devices 101, 102, and 103, and transmits an instruction to execute the wireless communication test to any one of the test devices, for example, the test device 101 placed on or near the location where the communication hub 20 is to be installed. The operation terminal 104 includes a display unit 104a. The operation terminal 104 may be a personal computer (PC) having the wireless communication function. In the following explanations, the operation terminal 104 is a smartphone.

The service van 105 is a vehicle which the worker drives when visiting a location where the gas meter 2, the IHD 4, and the communication hub 20 are installed, and includes a system capable of collecting data and exchanging data with the server 106. The data collected by the communicator 105A in the service van 105 includes a result of the wireless communication test executed by the test devices, contents of the wireless communication test, updated contents of wireless communication test, and the like. Data exchange is executed by 3G/LTE communication between the communicator 105A in the service van 105 and the server 106. The contents of the wireless communication test and the updated contents of wireless communication test will be explained later in detail. The communicator 105A in the service van 105 is capable of Wi-Fi or Bluetooth intercommunication with the test devices 101, 102, and 103.

The server 106 corresponds to the server 61 of the electric power company, the server 62 of the water company, and the server 63 of the gas company shown in FIG. 1. The server 106 collects and stores, not only the meter data transmitted from each of the meters, but also the contents of the wireless communication test, the uploaded contents of the wireless communication test, the result of the wireless communication test uploaded from the communicator 105A in the service van 105 and the operation terminal 104, the information that relates to the wireless communication test, and the like are.

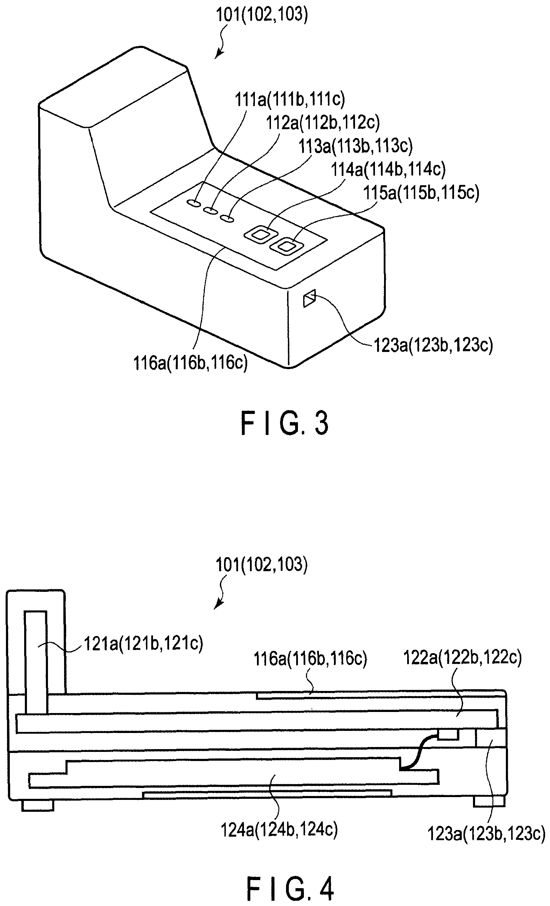

FIG. 3 is a perspective view showing an example of an appearance of the test device 101, 102, or 103. The appearance of the test device 101 is substantially a rectangular solid having a protrusion on an upper part. The test device 101 will be explained here.

In the following explanations, a final letter "a" of a reference numeral indicates a constituent element of the test device 101, a final letter "b" of a reference numeral indicates a constituent element of the test device 102, and a final letter "c" of a reference numeral indicates a constituent element of the test device 103. An LED/button area 116a is located on an upper surface of the test device 101. A Wi-Fi/Bluetooth LED (W/B LED) 111a, a ZigBee LED (ZB LED) 112a, a system/power state LED (S/P LED) 113a, a connect button 114a, and a power button 115a are located in the LED/button area 116a. The W/B LED 111a notifies the worker of the state of ZigBee communication of the test device 101 by lighting in various lighting modes. The ZB LED 112a notifies the worker of the state of ZigBee communication of the test device 101 by lighting in various lighting modes. The S/P LED 113a notifies the worker of the on-off state of the test device 101 and the state of battery by lighting in various lighting modes.

The connect button 114a is a switch to establish wireless communication links with the other test devices. Measurement of ZigBee communication with the other test devices can be executed by pressing the connect button 114a.

The power button 115a is used to turn on or turn off the power of the test device 101.

A connector terminal 123a is a terminal insertion opening for connection with an external device. For example, the connector terminal 123a may be a terminal conforming to USB standards.

FIG. 4 is a view showing an example of the inside of the test device 101, 102, or 103 as seen from the side.

The test device 101 includes the LED/button area 116a, a ZigBee antenna (ZB antenna) 121a, Wi-Fi/Bluetooth antenna (W/B antenna) 122a, the connector terminal 123a, a battery 124a, and the like.

As explained above, the W/B LED 111a, the ZB LED 112a, the S/P LED 113a, the connect button 114a, and the power button 115a are located in the LED/button area 116a.

The ZB antenna 121a is used when the test device 101 mutually executes ZigBee communication with the other communication device. When test device 101 transmits various signals such as a test signal by executing ZigBee communication, the test device 101 transmits the signals via the ZB antenna 121a.

The W/B antenna 122a is used when the test device 101 mutually executes Wi-Fi communication or Bluetooth communication with the other communication device. When the test device 101 transmits data such as the test result by using Wi-Fi communication or Bluetooth communication, the test device 101 transmits the data via the W/B antenna 122a.

The battery 124a supplies power necessary for the operation of the test device 101. The battery 124a is a rechargeable battery and is charged by a charger 132a that will be explained below.

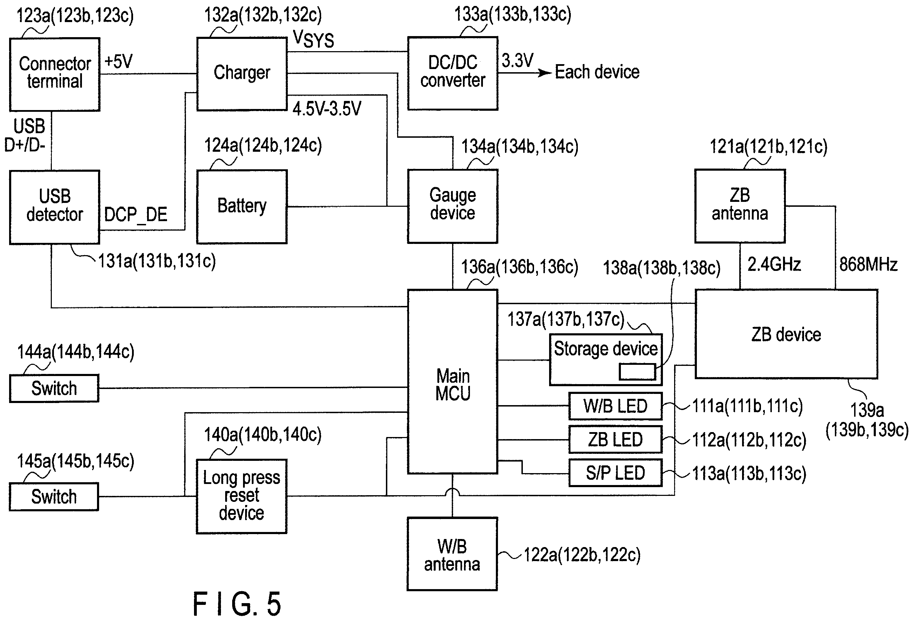

FIG. 5 is an exemplary circuit block diagram showing the test device 101, 102, or 103. The test device 101 will be explained here.

When a USB cable is connected to the connector terminal 123a, +5V power is supplied from the connector terminal 123a to the charger 132a, and D+/D- signal is supplied from the connector terminal 123a to a USB detector 131a. When the USB cable is connected to the connector terminal 123a, the USB detector 131a supplies DCP_DE signal to the charger 132a. When the charger 132a receives the DCP_DE signal, the charger 132a can charge the battery 124a fast with a large current.

A voltage (battery voltage VBAT) at which the charger 132a charges the battery 124a is about 4.5V to 3.5V. The charger 132a supplies system voltage VSYS to a DC/DC converter 133a. The DC/DC converter 133a supplies 3.3V voltage to each device in the test device 101. A gauge device 134a measures remaining power of the battery 124a. The lighting mode of the S/P LED 113a is varied in response to the measured remaining power.

A switch 144a is operated in response to an operation of the connect button 114a.

A switch 145a corresponds to the power button 115a. When the power button 115a is pressed, on-off state of the switch 145a is changed, and a main micro controller unit (main MCU) 136a changes the on-off state of the power in accordance with the on-off state of the switch 145a.

When it is detected that the power button 115a is long-pressed, a long press reset device 140a supplies a reset signal to the main MCU 136a.

In a storage device 137a, data such as the contents of the wireless communication test, the result of the wireless communication test, identification numbers of the other test devices, and the number of the channel on which link setting is succeeded, and a program 138a are stored. An example of the storage device 137a may be a flash memory.

The main MCU 136a executes whole control of the test device 101. The main MCU 136a executes various operations by reading the program 138a stored in the storage device 137a. The various operations include, for example, operations relating to the pre-test setting operation, operations relating to the wireless communication test, operations relating to updating of the contents of the wireless communication test, and operations relating to the transmission of the test results to the communicator 105A in the service van 105. The main MCU 136a will be explained below in detail.

A ZB device 139a is communication means for the test device 101 to execute ZigBee communication with the external device, and mutually executes ZigBee communication with the external device via the ZB antenna 121a. The external device means the other test device. The ZB device 139a can execute ZigBee communication in the 2.4 GHz frequency band. The ZB device 139a can execute ZigBee communication in the 868 MHz frequency band. The ZB device 139a and the ZB antenna 121a capable of executing communication in both of the 2.4 GHz frequency band and the 868 MHz frequency band are shown in FIG. 5, but the test device 101 may include a ZB device and a ZB antenna capable of executing communication in the 2.4 GHz frequency band, and a ZB device and a ZB antenna capable of executing communication in the 868 MHz frequency band.

The test device 101 can execute Wi-Fi communication or Bluetooth communication with the external device. Selection of Wi-Fi communication or Bluetooth communication is determined by the operation terminal 104. The test device 101 can execute Bluetooth communication with the operation terminal 104 via the W/B antenna 122a when the operation terminal 104 establishes Bluetooth connection with the test device 101, and test device 101 can execute Wi-Fi communication with the operation terminal 104 via the W/B antenna 122a when the operation terminal 104 establishes Wi-Fi connection with the test device 101.

The W/B LED 111a, the ZB LED 112a, and the S/P LED 113a are connected to the main MCU 136a. The lighting mode of each LED is controlled by the main MCU 136a.

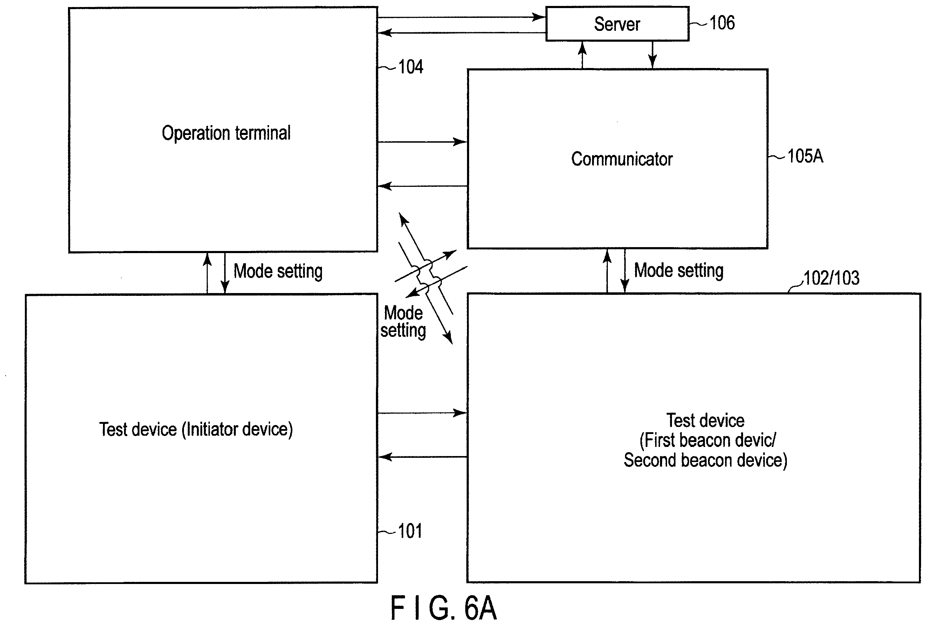

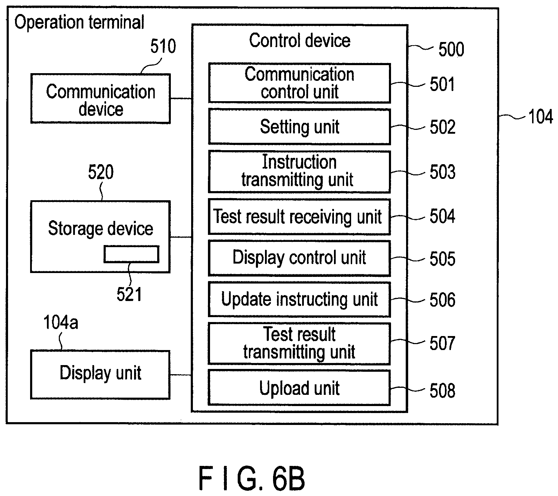

FIG. 6A is a block diagram showing an example of a functional configuration of the wireless communication test system 100. FIG. 6B is an exemplary block diagram showing a functional configuration of the operation terminal 104 shown in FIG. 6A.

The operation terminal 104 includes a control device 500, a communication device 510, a storage device 520, a display unit 104a, and the like.

The control device 500 executes whole control of the operation terminal 104. The control device 500 executes operations relating to a pre-test setting operation, operations relating to the wireless communication test, operations relating to updating of the contents of the wireless communication test, operations relating to the transmission of the test results to the communicator 105A in the service van 105, and the like, by reading a program 521 stored in the storage device 520. The control device 500 includes a communication control unit 501, a setting unit 502, an instruction transmitting unit 503, a test result receiving unit 504, a display control unit 505, an update instructing unit 506, a test result transmitting unit 507, an upload unit 508, as functional units that implement the wireless communication test system.

The communication control unit 501 executes an operation for establishing communication between the operation terminal 104 and the test devices 101, 102, and 103.

The setting unit 502 sets the test devices 101, 102, and 103 to a first device mode or a second device mode. More specifically, the setting unit 502 sets one of the plural test devices 101, 102, and 103 to the first device mode and sets the remaining test devices to the second device mode. In the first device mode, the wireless communication test is executed, based on a test instruction from the operation terminal 104. The test instruction makes the test device execute the wireless communication test. A test device set to the first device mode is hereinafter called an initiator device.

In the second device mode, a response signal is transmitted in response to a degree of reception of the test signal to the initiator device when the test signal is received from the initiator device. The test signal is transmitted from the initiator device to a beacon device when the wireless communication test is executed. The response signal will be explained below. The test device set to the second device mode is hereinafter called a beacon device. FIG. 6A shows a case where the test device 101 functions as the initiator device, the test device 102 functions as the first beacon device, and the test device 103 functions as the second beacon device.

The instruction transmitting unit 503 transmits a test instruction to the initiator device 101. The test instruction makes the initiator device 101 execute a test for determining whether the initiator device 101 and the beacon device 102 or 103 are capable of mutually executing wireless communication in the 2.4 GHz frequency band or not. Further, the instruction transmitting unit 503 transmits a test instruction to make the initiator device 101 execute a test for determining whether the initiator device 101 and the beacon device 102 or 103 are capable of mutually executing wireless communication in the 868 MHz frequency band or not, to the initiator device 101. Furthermore, the instruction transmitting unit 503 transmits an instruction to make the initiator device 101 end the wireless communication test executed by the initiator device 101 to the initiator device 101.

The test result receiving unit 504 receives the result of the wireless communication test executed by the initiator device 101 from the initiator device 101.

The display control unit 505 displays various screens on the display unit 104a. The display unit 104a also includes a function of input means and can detect a touch operation. When the operation terminal 104 is a PC that includes a keyboard, the display unit 104a may not include the function of input means.

The update instructing unit 506 transmits an update instruction of contents of the test executed by the initiator device 101 (test contents update instruction) to the initiator device 101. The update instruction includes updated contents of the wireless communication test stored in the storage device 520. The updated contents of the wireless communication test may be information that is downloaded from the server 106 or may be information that is transmitted from the communicator 105A in the service van 105.

The test result transmitting unit 507 transmits the result of the wireless communication test acquired from the initiator device 101 to the communicator 105A in the service van 105.

The upload unit 508 uploads the result of the wireless communication test acquired from the initiator device 101 to the server 106.

The communication device 510 is a communication means for the operation terminal 104 to mutually execute communication with the external device. More specifically, the communication device 510 can execute communication with the external device by using not only a cellular telephone communication function such as 3G/LTE, but Wi-Fi communication function or Bluetooth communication function. The external device may include the test devices 101, 102, and 103, communicator 105A in the service van 105, server 106 or the like.

The storage device 520 stores data such as the result of the wireless communication test received from the initiator device, the contents of the wireless communication test, the updated contents of the wireless communication test, and identification numbers of the test devices used in the wireless communication test, and the above-mentioned program 521.

FIG. 6C is an exemplary block diagram showing a functional configuration of communicator 105A in the service van of FIG. 6A. The communicator 105A includes a control device 600, a communication device 610, a storage device 620, and the like.

The control device 600 executes whole control of the communicator 105A. More specifically, the control device 600 executes operations relating to updating of the contents of the wireless communication test, operations relating to collection and processing of the wireless communication test, and the like by reading a program 621 stored in the storage device 620. The control device 600 includes a test result acquisition unit 601, an upload unit 602, and a test contents transmitting unit 603, as functional units that implement the wireless communication test system.

The test result acquisition unit 601 acquires the result of the wireless communication test from the operation terminal 104 or the initiator device 101.

The upload unit 602 uploads the result of the wireless communication test acquired from the initiator device 101 or the operation terminal 104 to the server 106.

The test contents transmitting unit 603 transmits the uploaded contents of the wireless communication test that is to be executed by the initiator device 101 to the operation terminal 104. The updated contents of the wireless communication test may be information that is downloaded from the server 106.

The communication device 610 is a communication means for the communicator 105A to mutually execute communication with the external device. The communication device 610 can execute communication with the external device by using not only a cellular telephone communication function such as 3G/LTE, but Wi-Fi communication function, Bluetooth communication function, and the like. The external device may include the initiator device 101, the operation terminal 104, the server 106 or the like.

In the storage device 620, data such as the contents of the wireless communication test including the updated contents of the wireless communication test, the result of the wireless communication test, and the like, and the above-mentioned program 621 are stored.

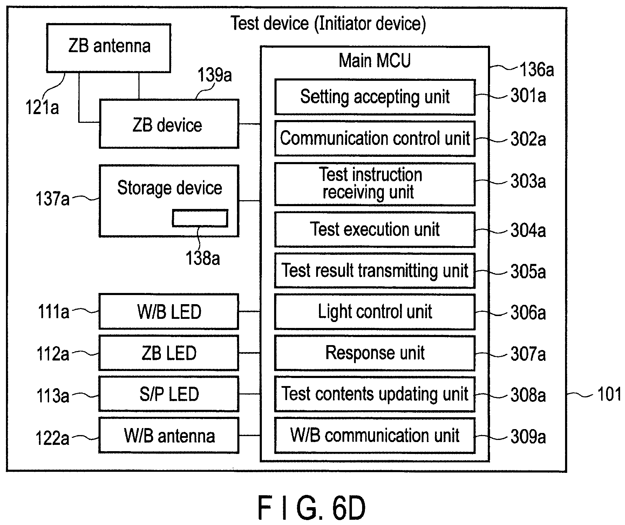

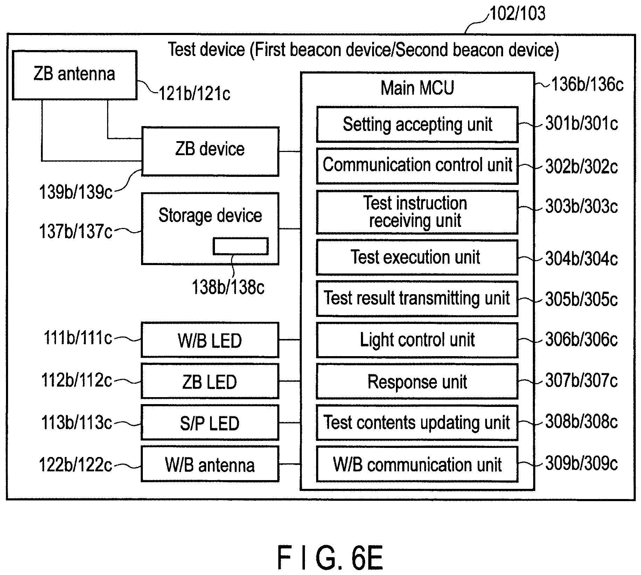

FIG. 6D is an exemplary block diagram showing a functional configuration of the test device 101 (initiator device) of FIG. 6A. FIG. 6E is an exemplary block diagram showing a functional configuration of the test device 102 or 103 (beacon device) of FIG. 6A. The main MCU 136a of the test device 101 includes a setting accepting unit 301a, a communication control unit 302a, a test instruction receiving unit 303a, a test execution unit 304a, a test result transmitting unit 305a, an light control unit 306a, a response unit 307a, a test contents updating unit 308a, Wi-Fi/Bluetooth (W/B) communication unit 309a, and the like, as functional units that execute the operations relating to the pre-test setting operation, the operations relating to the wireless communication test, the operations relating to updating of the contents of the wireless communication test, the operations relating to transmission of the test results to the communicator 105A in the service van 105, and the like.

The setting accepting unit 301a sets the device mode of the test device 101 in accordance with a device mode setting signal transmitted from the operation terminal 104.

When the test device 101 is set as the initiator device by the operation terminal 104, the communication control unit 302a executes an operation for establishing wireless communication for each of the first beacon device 102 and the second beacon device 103. The communication control unit 302a establishes the wireless communication for each of the first beacon device 102 and the second beacon device 103 via the ZB antenna 121a, by controlling the ZB device 139a.

The test instruction receiving unit 303a receives the test instruction from the operation terminal 104.

The test execution unit 304a executes the wireless communication test, based on the test instruction from the operation terminal 104. The test execution unit 304a executes the wireless communication test in the 2.4 GHz frequency band if the test instruction is an instruction for making initiator device 101 execute the wireless communication test in the 2.4 GHz frequency band, and executes the wireless communication test in the 868 MHz frequency band if the test instruction is an instruction for making initiator device 101 execute the wireless communication test in the 868 MHz frequency band.

The test result transmitting unit 305a transmits the result of the wireless communication test executed by the test execution unit 304a to the operation terminal 104. The test result transmitting unit 305a transmits the result of the wireless communication test to the communicator 105A in the service van 105.

The light control unit 306a makes the W/B LED 111a, the ZB LED 112a, and the S/P LED 113a light in a predetermined lighting mode.

In a case where the test device 101 is set as the beacon device by the operation terminal 104, when the response unit 307a receives the test signal from the initiator device, the response unit 307a transmits a response signal corresponding to the degree of reception of the test signal to the initiator device. The whole test signal from the initiator device is correctly received (when the degree of reception is high) in some cases, and only a part of test signal is correctly received (when the degree of reception is low) in the other cases. Even if the initiator device transmits the test signal, the whole test signal may be received by the beacon device (the degree of reception is zero). The response unit 307a transmits to the initiator device the response signal different in a case where the degree of reception is high and a case where the degree of reception is low.

When receiving an instruction to update the contents of the wireless communication test (test contents update instruction) from the operation terminal 104, the test contents updating unit 308a updates the contents of the wireless communication test to new contents, based on the update instruction.

The W/B communication unit 309a controls Wi-Fi communication and Bluetooth communication with the external device. The W/B communication unit 309a mutually executes Wi-Fi communication and Bluetooth communication with the external device via the W/B antenna 122a.

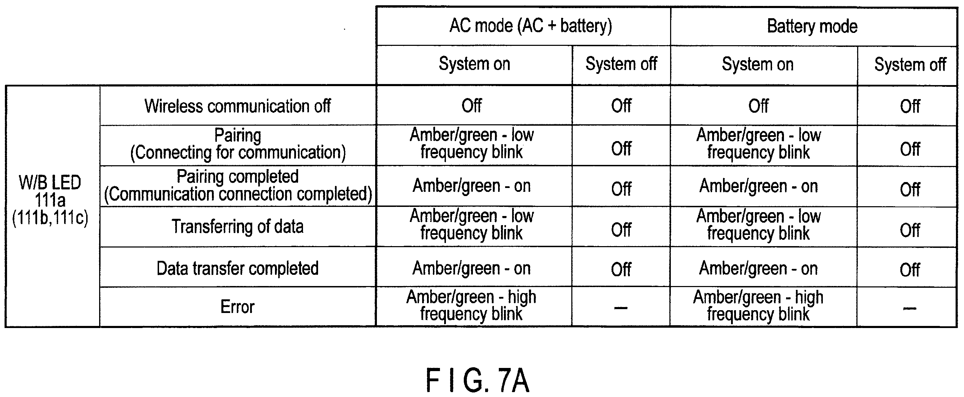

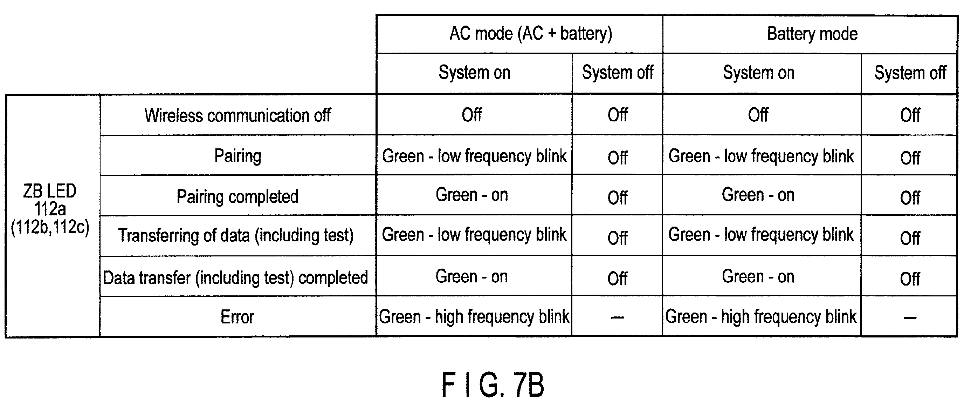

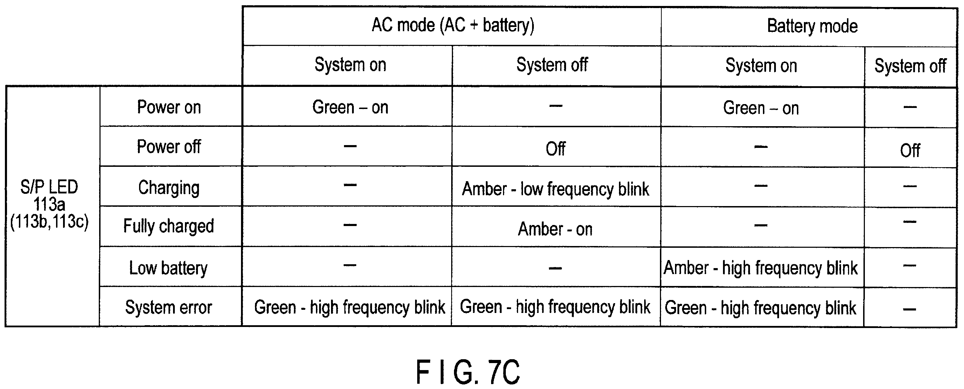

FIG. 7A is a table showing an example of a lighting mode of the W/B LED 111a provided in the test device 101, the W/B LED 111b provided in the test device 102, and the W/B LED 111c provided in the test device 103. FIG. 7B is a table showing an example of a lighting mode of the ZB LED 112a provided in the test device 101, the ZB LED 112b provided in the test device 102, and the ZB LED 112c provided in the test device 103. FIG. 7C is a table showing an example of a lighting mode of the S/P LED 113a provided in the test device 101, the S/P LED 113b provided in the test device 102, and the S/P LED 113c provided in the test device 103. The lighting mode includes blinking or no blinking, frequency of blinking, color at lighting, and the like. The test device 101 will be explained here.

FIG. 7A shows the lighting mode of the W/B LED 111a in each of the states of the test device, i.e., system-on in the AC mode, system-off in the AC mode, system-on in the battery mode, and system-off state in the battery mode.

The AC mode indicates a power supply mode in which power is supplied from an external power source and the test device can operate with the power supplied from the external power source. The AC mode indicates a power supply mode for supplying supplied power to the battery 124a and charging the battery 124a. The battery mode indicates a power supply mode in which power is not supplied from the external power source and the test device can operate with the power supplied from the battery 124a.

In FIG. 7A, the lighting mode of the W/B LED 111a are classified into states of the test device 101, i.e., wireless communication-off, pairing (connecting for communication), pairing completed (communication connection completed), transferring of data, data transfer completed, and error. The wireless communication indicates wireless communication using Wi-Fi or Bluetooth communication function. Pairing indicates an operation of establishing communication with the external device. Error indicates a state in which Wi-Fi communication or Bluetooth communication is failed.

For example, if the test device 101 is in the system-on state and is pairing (connecting for communication) with another test device by Wi-Fi or Bluetooth communication function, the W/B LED 111a blinks in amber or green with a low frequency, irrespective of the AC mode or the battery mode of the test device 101. The W/B LED 111a may blink at the low frequency in a lighting mode of alternately repeating lighting in amber and lighting in green.

"On" indicates a situation in which the W/B LED 111a is lighted, and "off" indicates a situation in which lighting of the W/B LED 111a is turned off. In the present specification, the lighting indicates maintaining the state of lighting without blinking.

The W/B LED 111b in the test device 102 and the W/B LED 111c in the test device 103 are also in the lighting mode similarly to the W/B LED 111a.

FIG. 7B shows the lighting mode of the ZB LED 112a in each of the states of the test device 101, i.e., system-on in the AC mode, system-off in the AC mode, system-on in the battery mode, and system-off state in the battery mode.

In FIG. 7B, the lighting mode of the ZB LED 112a is defined based on the states of the test device 101, i.e., ZigBee wireless communication-off, pairing, pairing completed, transferring of data (including test), data transfer (including test) completed, and error. Error indicates a state in which ZigBee communication is failed.

For example, if the test device 101 is in the system-on state and is pairing (connecting for communication) with another test device by ZigBee communication function, the ZB LED 112a blinks in green with a low frequency, irrespective of the AC mode or the battery mode of the test device 101.

The lighting mode of the ZB LED 112b in the test device 102 and the lighting mode of the ZB LED 112c in the test device 103 similar to the lighting mode of the ZB LED 112a.

FIG. 7C shows the lighting mode of the S/P LED 113a in the states of the test device 101, i.e., system-on in the AC mode, system-off in the AC mode, system-on in the battery mode, and system-off state in the battery mode.

In FIG. 7C, the lighting mode of the S/P LED 113a is defined based on the states of the test device 101, i.e., power-on, power-off, charging battery, fully charged battery, low battery, and system error.

For example, if the test device 101 is in the power-on state, the S/P LED 113a lights in green irrespective of the AC mode or the battery mode of the test device 101. If the test device 101 is in the system-off state in the AC mode and if the battery 124a is charging, the S/P LED 113a blinks in amber with a low frequency. If the test device 101 is in the system-off state in the AC mode and if the battery 124a is fully charged, the S/P LED 113a lights in amber. If the test device 101 is in the system-on state in the battery mode and if the battery 124a is a state of a low battery, the S/P LED 113a blinks in amber with a high frequency. If the test device 101 is in the system error state in the AC mode, or if the test device 101 in the system-on state in the battery mode and in the system error state, the S/P LED 113a blinks in green with a high frequency. Thus, the lighting mode the S/P LED 113a differs in states, i.e., the power-on state, charge states of the battery 124a, and the system error state.

The lighting mode of the S/P LED 113b in the test device 102 and the lighting mode of the S/P LED 113c in the test device 103 similar to the lighting mode of the S/P LED 113a.

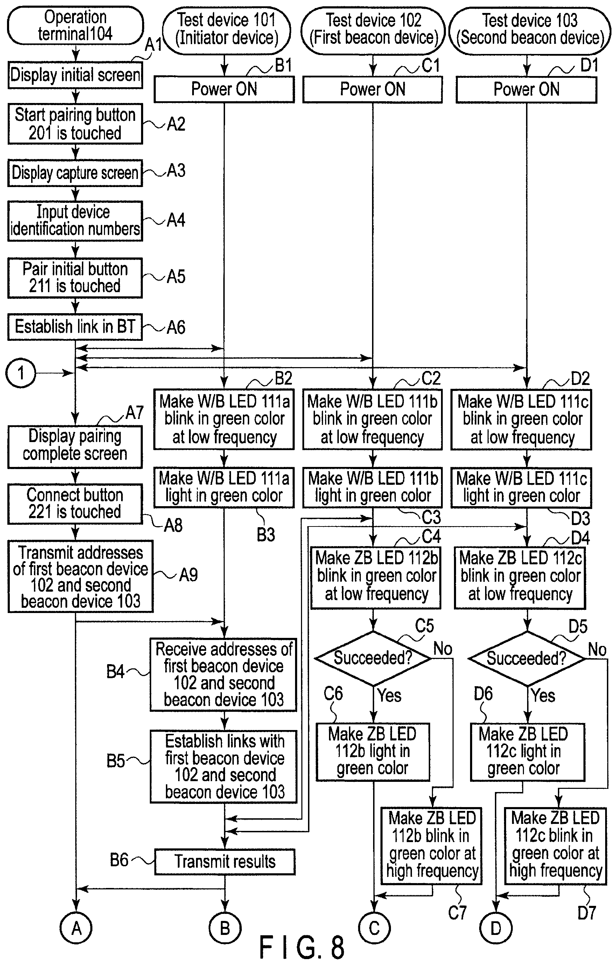

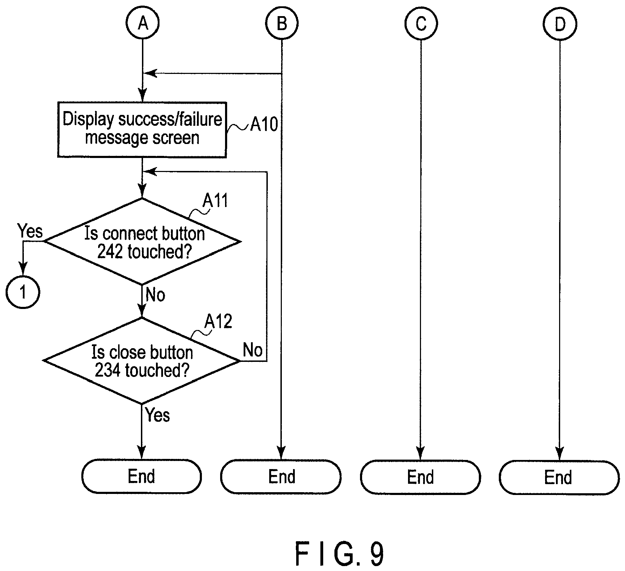

FIG. 8 and FIG. 9 are sequence diagrams showing a pre-test setting operation executed by the wireless communication test system 100. It is assumed that the worker executes the pre-test setting operation with three test devices 101, 102, and 103. The pre-test setting operation indicates a setting operation that is to be executed for each of the test devices 101, 102, and 103 before executing the wireless communication test.

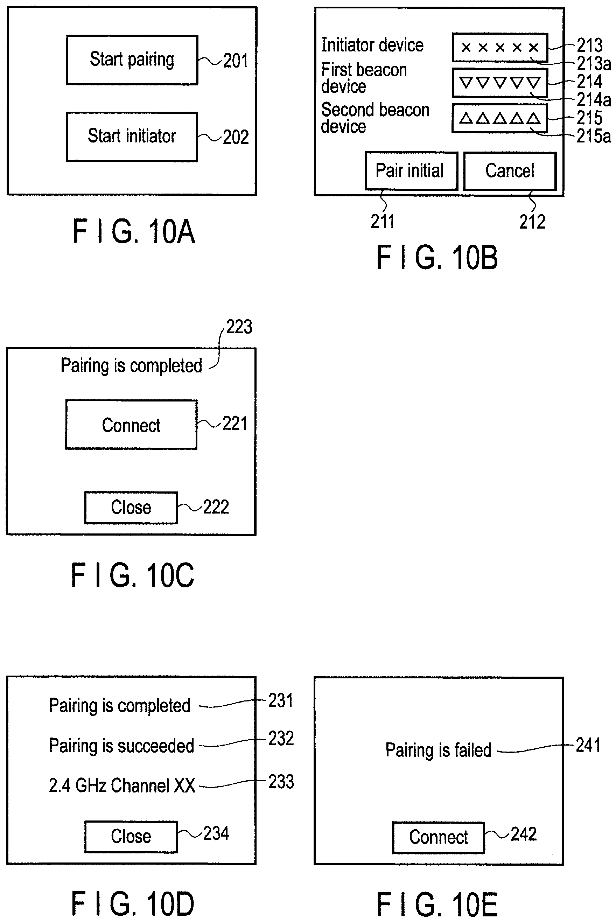

When the worker executes a predetermined operation with the operation terminal 104, the display control unit 505 displays an initial screen as shown in FIG. 10A on the display unit 104a of the operation terminal 104 (step A1). A start initiator button 202 on the initial screen will be explained later. The worker turns on power of the test devices 101, 102, and 103 by pressing the power buttons 115a, 115b, and 115c (steps B1, C1, and D1).

When the worker touches a start pairing button 201 on the initial screen (step A2), the display control unit 505 displays a capture screen as shown in FIG. 10B on the display unit 104a (step A3).

Next, the worker determines one of the test devices 101, 102, and 103 as the initiator device and determines remaining two devices as the beacon devices. In the following explanations, the worker determines the test device 101 as the initiator device, and also determines the test devices 102 and 103 as the first beacon device and the second the beacon device, respectively.

The workers inputs identification numbers of the respective test devices 101, 102, and 103 to the operation terminal 104 (step A4). For example, the worker touches a field 213 of the initiator device on the capture screen and inputs identification number 213a of the test device 101, touches a field 214 of the first beacon device and inputs identification number 214a of the test device 102, and touches a field 215 of the second beacon device and inputs identification number 215a of the test device 103.

For example, the identification numbers may be printed as bar cords on the test devices 101, 102, and 103 and the identification numbers may be input to the operation terminal 104 by reading the bar codes with the operation terminal 104. The worker may input the identification numbers to the operation terminal 104 by a worker's input operation. The identification numbers may be input to the operation terminal 104 by Near Field Communication (NFC) function. The test device 101 may activate the NFC function if, for example, the connect button 114a and the power button 115a are long-pressed simultaneously. The NFC function activating method is the same in the test devices 102 and 103.

The input identification numbers 213a, 214a, and 215a are stored in the storage device 520. When the identification numbers 213a, 214a, and 215a are input, the identification numbers 213a, 214a, and 215a of the test devices 101, 102, and 103 are displayed in the fields 213, 214, and 215 on the capture screen, respectively.

Next, when the worker touches a pair initial button 211 on the capture screen (step A5), the communication control unit 501 of the operation terminal 104 establishes links between the operation terminal 104 and the test device 101, between the operation terminal 104 and the test device 102, and between the operation terminal 104 and the test device 103, in Bluetooth communication, via the communication device 510 (step A6). Device names/passwords based on the identification numbers 213a, 214a, and 215a stored in the storage device 520 may be used for the link establishment.

In the link establishment, the setting unit 502 sets the initiator device 101 to the first device mode (operating as the initiator device), and sets the test devices 102 and 103 to the second device mode (operating as beacon devices). More specifically, the setting unit 502 transmits a first device mode setting signal for setting the first device mode to the test device 101, and transmits a second device mode setting signal for setting the second device mode to the test devices 102 and 103, via the communication device 510. When the setting accepting unit 301a receives the first device mode setting signal, in the test device 101, the test device 101 is set to the first device mode in accordance with the first device mode setting signal. After that, when the device mode setting is completed, the setting accepting unit 301a returns a first device mode setting complete signal indicating that the device mode setting is completed, to the operation terminal 104. In the test devices 102 and 103, when the setting accepting units 301b and 301c receive the second device mode setting signal, the test devices 102 and 103 are set to the second device mode in accordance with the second device mode setting signal, respectively. When the device mode setting is completed, each of the setting accepting units 301b and 301c returns second device mode setting complete signal indicating that the device mode setting is completed, to the operation terminal 104.

During the link establishment (pairing) via Bluetooth communication, the light control unit 306a of the test device 101 makes the W/B LED 111a blink in green at a low frequency (step B2). The light control unit 306b of the test device 102 makes the W/B LED 111b blink in green at a low frequency (step C2). The light control unit 306c of the test device 103 makes the W/B LED 111c blink in green at a low frequency (step D2). The W/B LED 111a, W/B LED 111b, and W/B LED 111c may blink in not green, but amber (see FIG. 7A). The W/B LED 111a, W/B LED 111b, and W/B LED 111c may blink at a low frequency in a lighting mode of alternately repeating lighting in amber and lighting in green.

If the establishment of the link between the operation terminal 104 and the test device 101 is succeeded, the light control unit 306a of the test device 101 makes the W/B LED 111a light in green (step B3). Similarly, the light control unit 306b of the test device 102 makes the W/B LED 111b light in green if the establishment of the link between the operation terminal 104 and the test device 102 is succeeded (step C3). The light control unit 306c of the test device 103 makes the W/B LED 111c light in green if the establishment of the link between the operation terminal 104 and the test device 103 is succeeded (step D3). The W/B LED 111a, W/B LED 111b, and W/B LED 111c may light in not green, but amber (see FIG. 7A).

If the establishment of the link between the operation terminal 104 and the test device 101 is failed, the light control unit 306a may make the W/B LED 111a blink in green at a high frequency. Similarly, the light control unit 306b may make the W/B LED 111b blink in green at a high frequency if the establishment of the link between the operation terminal 104 and the test device 102 is failed. The light control unit 306c may make the W/B LED 111c blink in green at a high frequency if the establishment of the link between the operation terminal 104 and the test device 103 is failed. The W/B LED 111a, W/B LED 111b, and W/B LED 111c may blink at a high frequency in a lighting mode of alternately repeating lighting in amber and lighting in green. If the link establishment is failed, the capture screen may be displayed on the display unit 104a in the operation terminal 104. Then, when the worker touches the pair initial button 211, the above-mentioned link establishment operation may be executed again.

If the link establishment via Bluetooth communication is succeeded (completed), this indicates that the settings for making the test device 101 operate as the initiator device, making the test device 102 operate as the beacon device, and making the test device 103 operate as the beacon device are completed.

Next, link settings between the test device (initiator device) 101 and the test device (first beacon device) 102, and between test device (initiator device) 101 and the test device (second beacon device) 103 via ZigBee communication will be explained.

If the link establishment via Bluetooth communication is succeeded (completed), the display control unit 505 displays a pairing complete screen as shown in FIG. 10C on the display unit 104a of the operation terminal 104 (step A7). On the pairing complete screen, a connect button 221, a close button 222, and a message 223 indicating that the pairing is completed are displayed.

When the worker touches the connect button 221 (step A8), the communication control unit 501 transmits an address of the first beacon device 102 and an address of the second beacon device 103 to the initiator device 101 via the communication device 510 (step A9). The addresses may be identification number 214a of the first beacon device 102 and identification number 215a of the second beacon device 103, which are input to the operation terminal 104 by the worker.

When the initiator device 101 receives the address of the first beacon device 102 and the address of the second beacon device 103 (step B4), the received addresses (i.e., the identification number 214a of the first beacon device 102 and the identification number 215a of the second beacon device 103) are supplied to the storage device 137a and stored in the storage device 137a. Then, the communication control unit 302a of the initiator device 101 executes the operation for establishing the wireless communication for the first beacon device 102 and the second beacon device 103, i.e., link settings (pairing) with the first beacon device 102 and the second beacon device 103 via ZigBee communication (step B5). The communication control unit 302a may first attempt the link setting using a default channel via ZigBee communication. If the link setting using the default channel is failed, link setting may be sequentially attempted by using different channels.

In the link setting, the light control unit 306b of the first beacon device 102 makes the ZB LED 112b blink in green at a low frequency (step C4), and the light control unit 306c of the second beacon device 103 makes the ZB LED 112c blink in green at a low frequency (step D4).

If the link setting between the initiator device 101 and the first beacon device 102 is succeeded (YES in step C5), a channel number corresponding to the succeeded channel is supplied to the storage device 137a of the initiator device 101 and the storage device 137b of the first beacon device 102 and stored in the storage device 137a and the storage device 137b. Then, the light control unit 306b makes the ZB LED 112b light in green (step C6). If the link setting is failed (NO in step C5), the light control unit 306b makes the ZB LED 112b blink in green at a high frequency (step C7).

Similarly, if the link setting between the initiator device 101 and the second beacon device 103 is succeeded (YES in step D5), a channel number corresponding to the succeeded channel is supplied to the storage device 137a of the initiator device 101 and the storage device 137c of the second beacon device 103 and stored in the storage device 137a and the storage device 137c. Then, the light control unit 306c makes the ZB LED 112c light in green (step D6). If the link setting is failed (NO in step D5), the light control unit 306c makes the ZB LED 112c blink in green at a high frequency (step D7).

The worker may press the connect button 114a of the initiator device 101 instead of touching the connect button 221 on the pairing setting screen. When the worker touches the connect button 114a, the communication control unit 302a of the initiator device 101 executes the link setting (pairing) with the first beacon device 102 and the second beacon device 103 via ZigBee communication, respectively. The worker can execute the wireless communication test between the initiator device 101 and the first beacon device 102, and between the initiator device 101 and the second beacon device 103 by operating the connect button 114a, in the state in which Bluetooth communication between the operation terminal 104 and the initiator device 101 is disconnected, which will be explained later.

The channel number corresponding to the channel on which the link setting between the initiator device 101 and the first beacon device 102 is succeeded may be different from the channel number corresponding to the channel on which the link setting between the initiator device 101 and the second beacon device 103 is succeeded. In this case, the channel number corresponding to each of the channels on which the link setting is succeeded is stored.

Then, the W/B communication unit 309a transmits the results of the link settings via ZigBee communication to the operation terminal 104 (step B6).

When the operation terminal 104 receives the results of the link settings via ZigBee communication from the initiator device 101 via the communication device 510 and the worker executes a predetermined operation on the operation terminal 104, the display control unit 505 displays a success/failure message screen as shown in FIG. 10D or FIG. 10E on the display unit 104a (step A10). The predetermined operation may be, for example, the operation of the worker touching the connect button 221 or the close button 222 on the pairing complete screen (FIG. 10C). The success/failure message screen as shown in FIG. 10D indicates an example of a case where the link settings between the initiator device 101 and the first beacon device 102 and between the initiator device 101 and the second beacon device 103 via ZigBee communication are succeeded.

The success/failure message screen as shown in FIG. 10D, displays a message 231 indicating that the link settings (pairing) between the initiator device 101 and the first beacon device 102 and between the initiator device 101 and the second beacon device 103 via ZigBee communication are completed, a message 232 indicating that the link settings are succeeded, channel information 233, and a close button 234. The channel information 233 includes a channel number corresponding to the channel on which the link settings between the initiator device 101 and the first beacon device 102 and between the initiator device 101 and the second beacon device 103 are succeeded. The success/failure message screen shown in FIG. 10D indicates an example of a case where the link settings between the initiator device 101 and the first beacon device 102 and between the initiator device 101 and the second beacon device 103 in the 2.4 GHz frequency band are succeeded. If the link setting is failed, the success/failure message screen as shown in FIG. 10E is displayed on the display unit 104a. The success/failure message screen shown in FIG. 10E displays a message 241 indicating that the link setting is failed and a connect button 242.

If the link setting is succeeded, the worker touches the close button 234 (NO in step A11 and YES in step A12), and the pre-test setting operation is ended. If the link setting is failed, the worker touches the connect button 242 on the success/failure message screen (YES in step A11). The flow goes back to step A7.

For example, the link setting between the initiator device 101 and the first beacon device 102 may be succeeded and the link setting between the initiator device 101 and the second beacon device 103 may be failed. In this case, the results of the link setting between the initiator device 101 and the second beacon device 102 and the link setting between the initiator device 101 and the second beacon device 103 may be displayed separately on the success/failure message screen (FIG. 10E). When the worker touches the connect button 242, the flow may return to step A7 and the only link setting between the initiator device 101 and the second beacon device 103, i.e., the beacon device with which the initiator device 101 fails the link setting may be executed again.

ZigBee communication between the initiator device 101 and the first beacon device 102 and between the initiator device 101 and the second beacon device 103 can be mutually executed by the above-explained link setting via ZigBee communication.

In step A6, a link may be established via Wi-Fi communication.

The test device 101 is set as the initiator device, and the test devices 102 and 103 are set as the first beacon device and the second beacon device, respectively, and the test deice 101 can mutually execute ZigBee communication with each of the test devices 102 and 103, by completing the above-explained pre-test setting operation.

In the case where, for example, the test device 102 is set as the initiator device, the test device 103 is set as the first beacon device, and the test device 101 is set as the second beacon device, the test device 102 executes the same operation as the above-explained operation of the initiator device, the test device 103 executes the same operation as the above-explained operation of the first beacon device, and the test device 101 executes the same operation as the above-explained operation of the second beacon device. The same operations are executed in a case where the test device 103 is set as the initiator device and the test devices 101 and 102 are set as the first beacon device and the second beacon device, respectively. In FIG. 8 and FIG. 9, two beacon devices are used, but one or three or more beacon devices may be used.

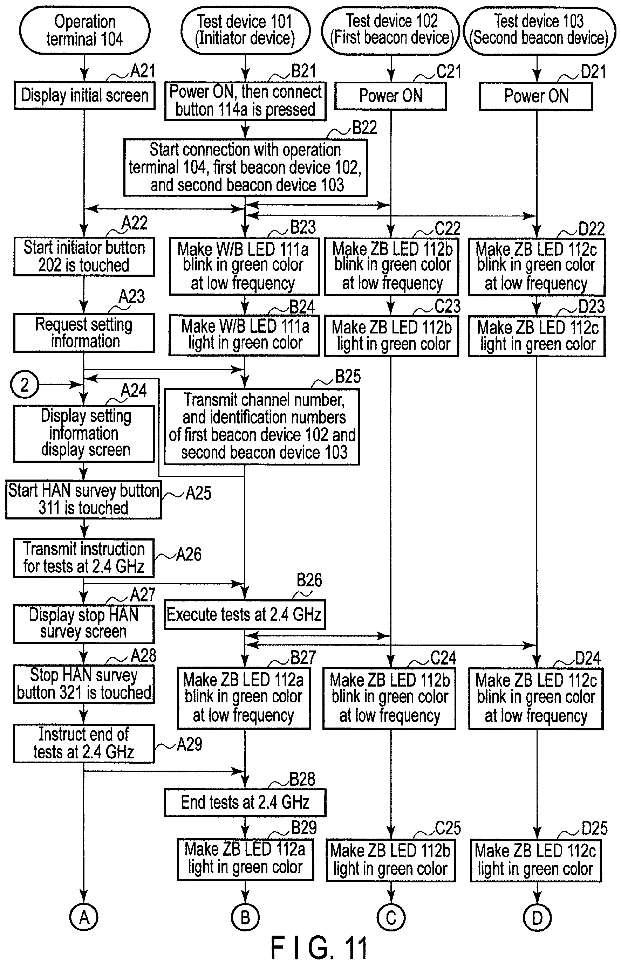

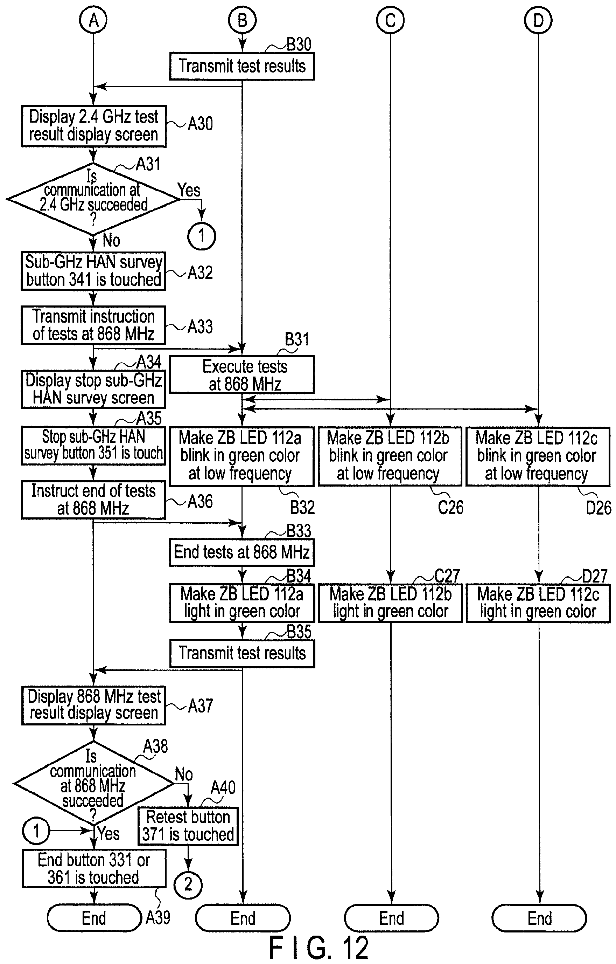

FIG. 11 and FIG. 12 are sequence diagrams showing operations relating to the wireless communication test executed by the wireless communication test system 100. It is assumed that the pre-test setting operations shown in FIG. 8 and FIG. 9 have been completed. That is, it is assumed that the test device 101 is set as the initiator device, the test device 102 is set as the first beacon device, the test device 103 is set as the second beacon device, and the test device 101 completes the communication setting (pairing) with the test devices 102 and 103.

In a case where, the test device 102 or 103 other than the test device 101 is set as the initiator device while the remaining test devices are set as the beacon devices, too, the same operations are executed.

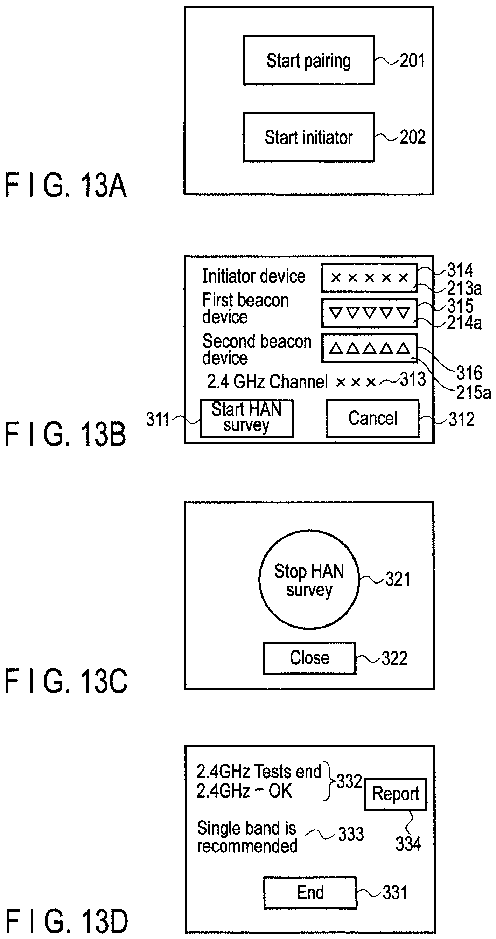

When the worker executes a predetermined operation with the operation terminal 104, the display control unit 505 displays an initial screen as shown in FIG. 13A on the display unit 104a of the operation terminal 104 (step A21).

The worker turns on the power of the first beacon device 102 and the second beacon device 103 (steps C21 and D21).

When the power of the initiator device 101 is turned on and the connect button 114a of the initiator device 101 is pressed (step B21), the communication control unit 302a of the initiator device 101 starts ZigBee connection between the initiator device 101 and the first beacon device 102 and ZigBee connection between the initiator device 101 and the second beacon device 103 (step B22). The communication control unit 302a establishes ZigBee connection with the first beacon device 102 and ZigBee connection with the second beacon device 103, using the identification numbers 214a and 215a stored in the storage device 137a. When the communication control unit 302a starts ZigBee connection, the light control unit 306b of the first beacon device 102 makes the ZB LED 112b blink in green at a low frequency (step C22), and the light control unit 306c of the second beacon device 103 makes the ZB LED 112c blink in green at a low frequency (step D22).

When the ZigBee connection between the initiator device 101 and the first beacon device 102 is succeeded, the light control unit 306b of the first beacon device 102 makes the ZB LED 112b light in green (step C23). When the ZigBee connection between the initiator device 101 and the second beacon device 103 is succeeded, the light control unit 306c of the second beacon device 103 makes the ZB LED 112c light in green (step D23).

When the power of the initiator device 101 is turned on and the connect button 114a of the initiator device 101 is pressed (step B21), the communication control unit 302a of the initiator device 101 establishes Bluetooth connection between the initiator device 101 and the operation terminal 104 (step B22). When the communication control unit 302a starts Bluetooth connection with the operation terminal 104, the light control unit 306a of the initiator device 101 makes the W/B LED 111a blink in green at a low frequency (step B23). The W/B LED 111a may blink in not green, but amber (see FIG. 7A). The W/B LED 111a may blink at a low frequency in a lighting mode of alternately repeating lighting amber and lighting green.

If Bluetooth connection between the operation terminal 104 and the initiator device 101 is succeeded, the light control unit 306a of the initiator device 101 makes the W/B LED 111a light in green (step B24). The W/B LED 111a may light in not green, but amber (see FIG. 7A).

When the worker touches the start initiator button 202 (step A22), the communication control unit 501 requires the initiator device 101 to transmit setting information (step A23).

When receiving the request for transmission of the setting information from the operation terminal 104, the communication control unit 302a of the initiator device 101 transmits the setting information including the identification number 214a of the first beacon device 102, the identification number 215a of the second beacon device 103, and the channel number stored in the storage device 137a, to the operation terminal 104 (step B25). The identification number 213a of the initiator device 101 may also be transmitted to the operation terminal 104.

When the operation terminal 104 receives the identification numbers 214a and 215a, and the channel number from the initiator device 101, the display control unit 505 of the operation terminal 104 displays a setting information display screen as shown in FIG. 13B on the display unit 104a (step A24). The identification number 213a of the initiator device 101 is displayed in field 314 of the initiator device 101 of the setting information display screen. The identification number 214a of the first beacon device 102 is displayed in a field 315 of the first beacon device 102 of the setting information display screen. The identification number 215a of the second beacon device 103 is displayed in a field 316 of the second beacon device 103 of the setting information display screen. Information 313 including the received channel number is displayed on the setting information display screen.

Even if the worker does not touch the start initiator button 202, step B25 is executed when the worker presses the connect button 114a of the initiator device 101. After that, step A24 is executed on the operation terminal 104 side.

Next, the worker arranges the initiator device 101 at or near the location where the communication hub 20 is to be installed, the first beacon device 102 at or near the location where, for example, the gas meter 2 is to be installed, and the second beacon device 103 at or near the location where the IHD 4 is to be installed.

When the worker touches start HAN (Home Area Network) survey button 311 of the setting information display screen (step A25), the instruction transmitting unit 503 transmits to the initiator device 101 a first test instruction to make the initiator device 101 execute a first test, and a third test instruction to make the initiator device 101 execute a third test for determining whether the initiator device 101 and the second beacon device 103 are capable of wireless communication with each other in the 2.4 GHz frequency band or not (step A26). The first test is a test for determining whether the initiator device 101 and the first beacon device 102 are capable of mutually executing wireless communication in the 2.4 GHz frequency band or not. The third test is a test for determining whether the initiator device 101 and the second beacon device 103 are capable of mutually executing wireless communication in the 2.4 GHz frequency band or not. After that, the display control unit 505 displays a stop HAN survey screen as shown in FIG. 13C on the display unit 104a (step A27). The stop HAN survey screen displays a stop HAN survey button 321 and a close button 322.

The test execution unit 304a executes the first test when the test instruction receiving unit 303a of the initiator device 101 receives the first test instruction. The test execution unit 304a executes the third test when the test instruction receiving unit 303a receives the third test instruction (step B26). The test execution unit 304a periodically transmits the first test signal in the 2.4 GHz frequency band to the first beacon device 102, and periodically transmits the third test signal in the 2.4 GHz frequency band to the second beacon device 103. The first test signal and the third test signal include messages and data.

When the first beacon device 102 receives the first test signal, a response unit 307b of the first beacon device 102 transmits a first response signal to the initiator device 101. When the second beacon device receives the third test signal, a response unit 307c of the second beacon device 103 transmits a third response signal to the initiator device 101. Examples of the first and third response signals include ACK and Selective ACK. Each of the first response signal transmitted from the response unit 307b when the first beacon device 102 correctly receives the first test signal (i.e., the degree of reception is high), and the third response signal transmitted from the response unit 307c when the second beacon device 103 correctly receives the third test signal (i.e., the degree of reception is high) is ACK. ACK indicates a signal indicative of positive contents, which is transmitted from the data receiving side to the data transmitting side.

On the other hand, each of the first response signal transmitted from the response unit 307b to the initiator device 101 when the first beacon device 102 correctly receives only a part of the first test signal (i.e., the degree of reception is low), and the third response signal transmitted from the response unit 307c to the initiator device 101 when the second beacon device 103 correctly receives only a part of the third test signal (i.e., the degree of reception is low) is Selective ACK. Selective ACK indicates a signal indicative of the contents requiring data failed in communication to be retransmitted, which is transmitted from the data receiving side to the data transmitting side.

The test execution unit 304a receives the first response signal and the third response signal.

The wireless communication test is executed based on the contents of the wireless communication test stored in the storage device 137a. Details of the wireless communication test will be explained later.

During the first test, the light control unit 306a of the initiator device 101 makes the ZB LED 112a blink in green at a low frequency (step B27), and the light control unit 306b of the first beacon device 102 makes the ZB LED 112b blink in green at a low frequency (step C24) .

During the third test, the light control unit 306a of the initiator device 101 makes the ZB LED 112a blink in green at a low frequency (step B27), and the light control unit 306c of the second beacon device 103 makes the ZB LED 112c blink in green at a low frequency (step D24) .

When an operation to make the initiator device 101 cancel the test is executed by using the operation terminal 104, the ZB LED 112a of the initiator device 101 may blink in green at a high frequency. The ZB LED 112b of the first beacon device 102 may blink in green at a high frequency, and the ZB LED 112c of the second beacon device 103 may blink in green at a high frequency.

Next, when the worker touches the stop HAN survey button 321 of the stop HAN survey screen (step A28), the instruction transmitting unit 503 of the operation terminal 104 transmits an instruction to make the initiator device 101 end the wireless communication test in the 2.4 GHz frequency band (i.e., 2.4 GHz test end instruction) to the initiator device 101 (step A29) .

When the initiator device 101 receives the 2.4 GHz test end instruction, the test execution unit 304a ends the first test and the third test (step B28). The test execution unit 304a stops the transmission of the first test signal in the 2.4 GHz frequency band that was periodically transmitted to the first beacon device 102, and the third test signal in the 2.4 GHz frequency band that was periodically transmitted to the second beacon device 103.

When the first test and the third test are ended, the light control unit 306a of the initiator device 101 makes the ZB LED 112a light in green (step B29). The light control unit 306b of the first beacon device 102 makes the ZB LED 112b light in green when the first test is ended (step C25), and the light control unit 306c of the second beacon device 103 makes the ZB LED 112c light in green when the third test is ended (step D25) .

When the first test and the third test are ended, results of the first test and the third test are supplied to the storage device 137a and stored in the storage device 137a. The test result transmitting unit 305a transmits the results of the first test and the third test to the operation terminal 104 (step B30). Each of the results of the first test and the third test constitutes a summarized message. The summarized message includes information such as the type, frequency band, rate of reception, and retransmission count of the test signal (message) used in the wireless communication test.

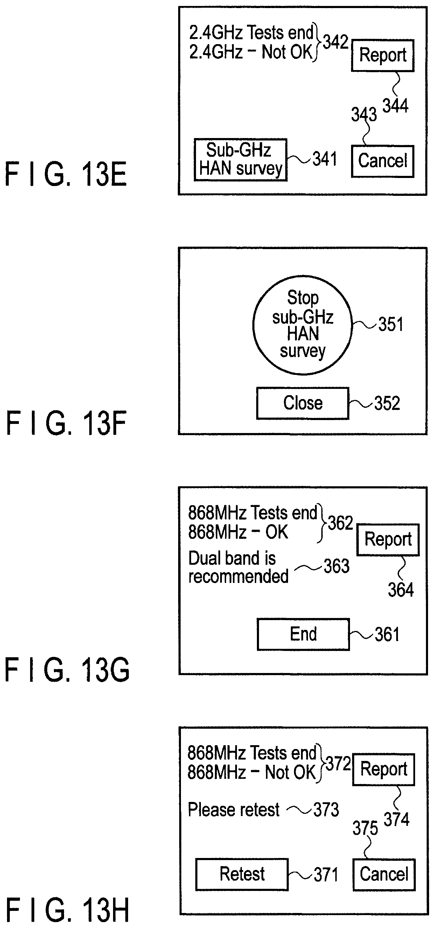

When the test result receiving unit 504 of the operation terminal 104 receives the results of the tests in the 2.4 GHz frequency band (i.e., first test result and third test result), the display control unit 505 displays the 2.4 GHz test result display screen as shown in FIG. 13D or FIG. 13E on the display unit 104a (step A30). It is determined, based on the received test results, whether the initiator device 101 and the first beacon device 102 are capable of mutually executing ZigBee communication or not and whether the initiator device 101 and the second beacon device 103 are capable of mutually executing ZigBee communication or not. The screen as shown in FIG. 13D or FIG. 13E is displayed on the display unit 104a.

The screen shown in FIG. 13D is displayed when the initiator device 101 and the first beacon device 102 are capable of mutually executing (succeed) ZigBee communication in the frequency of 2.4 GHz and the initiator device 101 and the second beacon device 103 are capable of mutually executing (succeed) ZigBee communication in the frequency of 2.4 GHz. FIG. 13D shows an end button 331, test result information 332, information 333 indicating that installation of a single-band communication hub 20, single-band meters 1, 2, and 3, and a single-band IHD 4 is recommended, and a report button 334.

Either of the mutual communication between the initiator device 101 and the first beacon device 102 and the mutual communication between the initiator device 101 and the second beacon device 103 may be succeeded. In this example, the communication is determined to be enabled (succeeded) only when both of the communications are succeeded, and the communication is determined to be disabled (failed) when either of the communications is succeeded. Thus, when the communication is determined to be enabled (succeeded) based on the first test result and the third test result, the worker is recommended to install the single-band devices.

The screen shown in FIG. 13E is displayed when the initiator device 101 and the second beacon device 103 are not capable of mutually executing (fail) ZigBee communication in the 2.4 GHz frequency band and/or when the initiator device 101 and the second beacon device 103 are not capable of mutually executing (fail) ZigBee communication in the 2.4 GHz frequency band. FIG. 13E shows a sub-GHz HAN survey button 341, test result information 342, a cancel button 343, and a report button 344.

If both of the results of the first test and the third test indicate success (YES in step A31), the worker touches the end button 331 (step A39) and ends the operations relating to the wireless communication test.

If at least one of the results of the first test or the third test indicates failure (NO in step A31), the worker touches the sub-GHz HAN survey button 341 (step A32). After that, the instruction transmitting unit 503 transmits to the initiator device 101 a second test instruction to make the initiator device 101 execute a second test, and a fourth test instruction to make the initiator device 101 execute a fourth test (step A33). A second test is a test for determining whether the initiator device 101 and the first beacon device 102 are capable of mutually executing wireless communication in the 868 MHz frequency band or not. The fourth test is a test for determining whether the initiator device 101 and the second beacon device 103 are capable of mutually executing wireless communication in the 868 MHz frequency band or not. After that, the display control unit 505 displays a stop sub-GHz HAN survey screen as shown in FIG. 13F on the display unit 104a (step A34). The stop sub-GHz HAN survey screen displays a stop sub-GHz HAN survey button 351 and a close button 352.

The test execution unit 304a executes the second test when the test instruction receiving unit 303a of the initiator device 101 receives the second test instruction, and the test execution unit 304a of the initiator device 101 executes the fourth test when the test instruction receiving unit 303a receives the fourth test instruction (step B31). The test execution unit 304a periodically transmits the second test signal in the 868 MHz frequency band to the first beacon device 102, and periodically transmits the fourth test signal in the 868 MHz frequency band to the second beacon device 103. The second test signal and the fourth test signal include messages and data.

When the first beacon device 102 receives the second test signal, a response unit 307b of the first beacon device 102 transmits a second response signal to the initiator device 101. When the second beacon device 103 receives the fourth test signal, a response unit 307c of the second beacon device 103 transmits a fourth response signal to the initiator device 101. Examples of the second and fourth response signals include ACK and Selective ACK. Each of the second response signal transmitted from the response unit 307b when the first beacon device 102 correctly receives the second test signal (i.e., the degree of reception is high), and the fourth response signal transmitted from the response unit 307c when the second beacon device 103 correctly receives the fourth test signal (i.e., the degree of reception is high) is ACK.

On the other hand, each of the second response signal transmitted from the response unit 307b when the first beacon device 102 correctly receives only a part of the second test signal (i.e., the degree of reception is low), and the fourth response signal transmitted from the response unit 307c when the second beacon device 103 correctly receives only a part of the fourth test signal (i.e., the degree of reception is low) is Selective ACK.

The test execution unit 304a receives the second response signal and the fourth response signal.

The wireless communication test is executed based on the contents of the wireless communication test stored in the storage device 137a.

During the second test, the light control unit 306a of the initiator device 101 makes the ZB LED 112a blink in green at a low frequency (step B32), and the light control unit 306b of the first beacon device 102 makes the ZB LED 112b blink in green at the low frequency (step C26).

During the fourth test, the light control unit 306a of the initiator device 101 makes the ZB LED 112a blink in green at a low frequency (step B32), and, the light control unit 306c of the second beacon device 103 makes the ZB LED 112c blink in green at a low frequency (step D26).

Next, when the worker touches the stop sub-GHz HAN survey button 351 of the stop sub-GHz HAN survey screen (step A35), the instruction transmitting unit 503 transmits an instruction to make the initiator device 101 end the wireless communication test in the 868 MHz frequency band (i.e., 868 MHz test end instruction) to the initiator device 101 (step A36).

When the initiator device 101 receives the 868 MHz test end instruction, the test execution unit 304a ends the second test and the fourth test that is being executed (step B33). The test execution unit 304a stops the transmission of the second test signal in the 868 MHz frequency band that was periodically transmitted to the first beacon device 102, and the fourth test signal in the 868 MHz frequency band that was periodically transmitted to the second beacon device 103.

When the second test and the fourth test are ended, the light control unit 306a of the initiator device 101 makes the ZB LED 112a light in green (step B34). The light control unit 306b of the first beacon device 102 makes the ZB LED 112b light in green when the second test is ended (step C27), and the light control unit 306c of the second beacon device 103 makes the ZB LED 112c light in green when the fourth test is ended (step D27).

When the second test and the fourth test are ended, results of the second test and the fourth test are supplied to the storage device 137a and stored in the storage device 137a. The test result transmitting unit 305a transmits the results of the second test and the fourth test to the operation terminal 104 (step B35). Each of the results of the second test and the fourth test constitutes a summarized message. The summarized message includes information such as the type, frequency band, rate of reception, and retransmission count of the test signal (message) used in the wireless communication test.

When the test result receiving unit 504 of the operation terminal 104 receives the results of the test in the 868 MHz frequency band (i.e., second test result and fourth test result), the display control unit 505 displays an 868 MHz test result display screen as shown in FIG. 13G or FIG. 13H on the display unit 104a (step A37). It is determined, based on the received test results, whether the initiator device 101 and the first beacon device 102 are capable of mutually executing ZigBee communication or not and whether the initiator device 101 and the second beacon device 103 are capable of mutually executing ZigBee communication or not. The screen shown in FIG. 13G or FIG. 13H is displayed on the display unit 104a in accordance with the determination results.

The screen shown in FIG. 13G is displayed when the initiator device 101 and the first beacon device 102 are capable of mutually executing (succeed) ZigBee communication in the frequency of 868 MHz and when the initiator device 101 and the second beacon device 103 are capable of mutually executing (succeed) ZigBee communication in the frequency of 868 MHz. FIG. 13G shows an end button 361, test result information 362, information 363 indicating that installation of a dual-band communication hub 20, dual-band various meters, and a dual-band IHD 4 is recommended, and a report button 364. Either of the mutual communication between the initiator device 101 and the first beacon device 102 and the mutual communication between the initiator device 101 and the second beacon device 103 may be succeeded. In this example, the communication is determined to be enabled (succeeded) only when both of the communications are succeeded, and the communication is determined to be disabled (failed) when either of the communications is succeeded. Thus, when the communication is determined to be enabled (succeeded) based on the second test result and the fourth test result, the worker is recommended to install the dual-band devices.

The screen shown in FIG. 13H is displayed when the initiator device 101 and the first beacon device 102 are not capable of mutually executing (fail) ZigBee communication in the 868 MHz frequency band and/or when the initiator device 101 and the second beacon device 103 are not capable of mutually executing (fail) ZigBee communication in the 868 MHz frequency band. FIG. 13H shows a retest button 371, test result information 372, information 373 indicating that retest is recommended, a report button 374, and a cancel button 375.

If both of the results of the second test and the fourth test indicate success (YES in step A38), the worker touches the end button 361 (step A39), and then the wireless communication test system ends the operations relating to the wireless communication test.

If at least one of the results of the second test or the fourth test indicates failure (NO in step A38), the worker touches the retest button 371 (step A40) and the flow goes back to step A24.

The wireless communication tests at 2.4 GHz and 868 MHz are ended by operating the operation terminal 104 as shown in FIG. 11 and FIG. 12, but the initiator device 101 itself may end the wireless communication test. For example, when the wireless communication test conforming to the contents of the wireless communication test stored in the storage device 137a is completed, the initiator device 101 itself may end the wireless communication test.

Bluetooth communication between the operation terminal 104 and the initiator device 101 may be disconnected during the first test and the third test. When Bluetooth communication between the operation terminal 104 and the initiator device 101 remains established, a frequency band being used in Bluetooth communication between the operation terminal 104 and the initiator device 101 may overlap the frequency band being used in ZigBee communication (the 2.4 GHz frequency band), and the wireless communication test may not be executed appropriately. Therefore, overlapping of the frequency band being used in Bluetooth communication between the operation terminal 104 and the initiator device 101 and the frequency band being used in ZigBee communication (the wireless communication test of the 2.4 GHz) can be prevented by disconnecting Bluetooth communication. Similarly, Bluetooth communication between the operation terminal 104 and the initiator device 101 may be disconnected during the second test and the fourth test.

In this case, the worker presses the connect button 114a of the initiator device 101 in order to execute the wireless communication tests between the test device 101 and the test device 102 and between the test device 101 and the test device 103 in a state in which Bluetooth communication between the operation terminal 104 and the test device 101 is disconnected.

That is, even if the stop HAN survey button 321 is not touched but, instead of this operation, if the connect button 114a of the initiator device 101 is pressed, the first and third test are executed.

In this case, if the connect button 114a is pressed, the communication control unit 302a of the initiator device 101 transmits an instruction to make the operation terminal 104 disconnect Bluetooth connection with the initiator device 101, to the operation terminal 104. When the operation terminal 104 receives the disconnect instruction, the communication control unit 501 disconnects Bluetooth connection between the operation terminal 104 and the initiator device 101. The communication control unit 302a of the initiator device 101 disconnects Bluetooth connection with the operation terminal 104.

Next, step B26 is executed (execution of the first test and the third test). During the first test and the third test, step B27 is executed in the initiator device 101. If the connect button 114a is pressed during the test, the test that is being executed are canceled.

When the wireless communication test conforming to the contents of the wireless communication test stored in the storage device 137a is completed, the test execution unit 304a of the initiator device 101 ends the wireless communication test. Then, step B29 is executed in the initiator device 101. Furthermore, the communication control unit 302a establishes Bluetooth connection between the operation terminal 104 and the initiator device 101.

Similarly, even if the stop sub-GHz HAN survey button 351 is not pressed but, instead of this operation, if the connect button 114a of the initiator device 101 is pressed, the second test and the fourth test are executed.

In this case, when the connect button 114a is pressed, the communication control unit 302a of the initiator device 101 transmits a disconnect instruction to make the operation terminal 104 disconnect Bluetooth connection with the initiator device 101, to the operation terminal 104 and, when the operation terminal 104 receives the disconnect instruction, the communication control unit 501 disconnects Bluetooth connection between the operation terminal 104 and the initiator device 101. The communication control unit 302a of the initiator device 101 disconnects Bluetooth connection with the operation terminal 104.

Next, step B31 is executed (execution of the second test and the fourth test). During the second test and the fourth test, step B32 is executed in the initiator device 101. If the connect button 114a is pressed during the test, the test that is being executed are canceled.

When the wireless communication test conforming to the contents of the wireless communication test stored in the storage device 137a is completed, the test execution unit 304a of the initiator device 101 ends the wireless communication test. Then, step B34 is executed in the initiator device 101. Furthermore, the communication control unit 302a establishes Bluetooth connection between the operation terminal 104 and the initiator device 101.

As explained above, since the ZB LEDs 112a, 112b, and 112c of the test devices 101, 102, and 103 light in different situations during the test and at the test end, the worker can recognize whether the wireless communication test is being executed or the wireless communication test is ended by watching the test devices.

If only the result of the first test that relates to the first beacon device 102 indicates that the wireless communication cannot be mutually executed, of the first test result and the third test result at 2.4 GHz, the instruction transmitting unit 503 may transmit only the second test instruction that relates to the first beacon device 102 to the initiator device 101, and only the second test that relates to the first beacon device 102 may be executed in relation to the wireless communication at 868 MHz. If only the result of the third test that relates to the second beacon device 103 indicates that the wireless communication cannot be mutually executed, of the first test result and the third test result, the instruction transmitting unit 503 may transmit only the fourth test instruction that relates to the second beacon device 103 to the initiator device 101, and only the fourth test that relates to the second beacon device 103 may be executed in relation to the wireless communication at 868 MHz.

Similarly, if only the result of the second test that relates to the first beacon device 102 indicates that the wireless communication cannot be mutually executed, of the second test result and the fourth test result, the instruction transmitting unit 503 may transmit only the first test instruction that relates to the first beacon device 102 to the initiator device 101, and only the first test that relates to the first beacon device 102 may be executed as the re-test. If only the result of the fourth test indicates that the wireless communication cannot be mutually executed, of the second test result and the fourth test result, the instruction transmitting unit 503 may transmit only the third test instruction that relates to the second beacon device 103 to the initiator device 101, and only the third test that relates to the second beacon device 103 may be executed as the re-test.

If either of the first test result and the third test result indicates that the wireless communication cannot be executed, the first test result and the third test result may be displayed separately on the 2.4 GHz test result display screen. If either of the second test result that relates to the first beacon device 102 and the fourth test result that relates to the second beacon device 103 indicates that the wireless communication cannot be mutually executed, the second test result and the fourth test result may be displayed separately on the 868 MHz test result display screen.

In step B27, the light control unit 306a may change the lighting mode of the ZB LED 112a in accordance with the results of the first test and the third test. For example, the light control unit 306a may make the ZB LED 112a light in green if the first test result and the third test result indicate that the wireless communication can be mutually executed, and the light control unit 306a may make the ZB LED 112a blink in green at a high frequency if the first test result and the third test result indicate that the wireless communication cannot be mutually executed.

Similarly, in step B32, the light control unit 306a may make the ZB LED 112a light in green if the second test result and the fourth test result indicate that the wireless communication can be mutually executed, and the light control unit 306a may make the ZB LED 112a blink in green at a high frequency if at least one of the second test result or the fourth test result indicates that the wireless communication cannot be mutually executed.

In steps C25 and C27, the light control unit 306b of the first beacon device 102 may make ZB LED 112b light in green if the test result indicates that the wireless communication can be executed, and may make the ZB LED 112b blink in green at a high frequency if the test result indicates the wireless communication cannot be mutually executed. Similarly, in steps D25 and D27, the light control unit 306c of the second beacon device 103 may make the ZB LED 112c light in green if the test result indicates that the wireless communication can be executed, and may make the ZB LED 112c blink in green at a high frequency if the test result indicates the wireless communication cannot be mutually executed.

In this case, the worker can recognize the result of the wireless communication test without operating the operation terminal 104, by watching the ZB LED of the test device.

In FIG. 11 and FIG. 12, two beacon devices are installed, but one or three or more beacon devices may be installed. In this case, the wireless communication test is executed in the same manner.

In step B30, if the report button 334 shown in FIG. 13D or the report button 344 shown in FIG. 13E is touched, the test result may be transmitted to the operation terminal 104. Similarly, in step B35, if the report button 364 shown in FIG. 13G or the report button 374 shown in FIG. 13H is touched, the test result may be transmitted to the operation terminal 104.

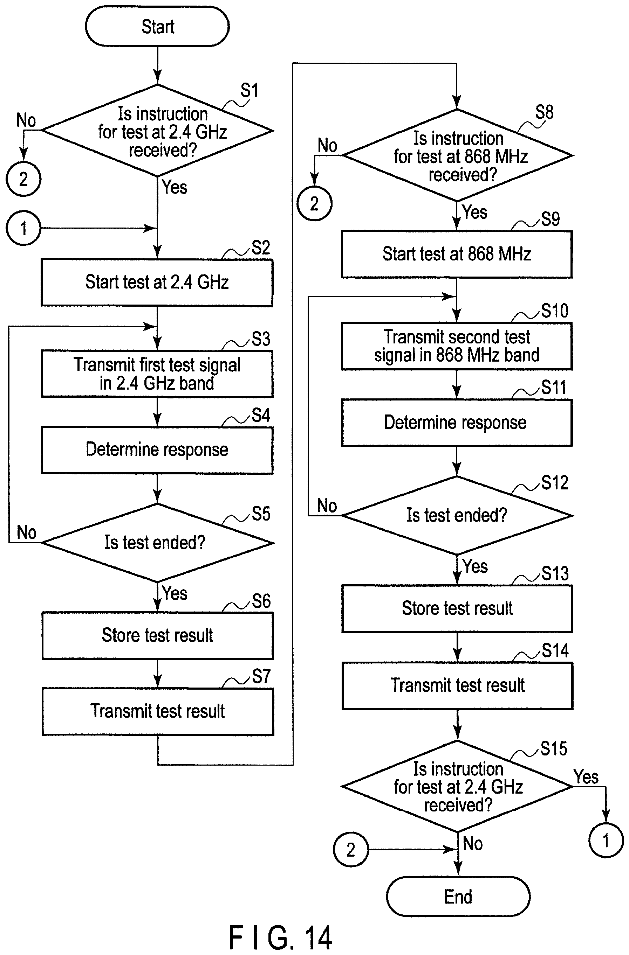

FIG. 14 is a flowchart showing the wireless communication test executed by the test device that is set as an initiator device (first device mode). In the following explanations, it is assumed that the test device 101 is set as the initiator device and the test device 102 is set as the beacon device.

In step S1, it is determined whether or not the test instruction receiving unit 303a receives a test instruction from the operation terminal 104. The test instruction makes the initiator device 101 execute the wireless communication test in the 2.4 GHz frequency band between the initiator device 101 and the beacon device 102 (i.e., the 2.4 GHz test instruction). In this example, the 2.4 GHz test instruction indicates the above-mentioned first test instruction.

If the test instruction receiving unit 303a receives the 2.4 GHz test instruction (YES in step S1), the test execution unit 304a starts the 2.4 GHz wireless communication test (2.4 GHz test) between the initiator device 101 and the beacon device 102 (step S2). In this example, the 2.4 GHz test indicates the above-mentioned first test. The 2.4 GHz test is executed based on contents of the wireless communication test stored in the storage device 137a. The contents of the wireless communication test include the type of the test signal such as the level of the test signal to be transmitted, a period to transmit the test signal, the time interval to transmit the test signal, and the like.

When the 2.4 GHz test is started, the test execution unit 304a transmits the first test signal in the 2.4 GHz frequency band to the beacon device 102 (step S3). The test execution unit 304a determines a response from the beacon device 102 (step S4).

More particularly, when the response unit 307b of the beacon device 102 receives the first test signal, the response unit 307b transmits a first response signal corresponding to the degree of reception of the first test signal to the initiator device 101. The test execution unit 304a determines whether the first response signal is received or not and, if the first response signal is received, determines the response based on the contents (ACK or Selective ACK) of the first response signal. If the first response signal is Selective ACK, the test execution unit 304a retransmits to the beacon device 102 the data required to be transmitted in the first test signal. When the retransmitted data is received by the beacon device 102, the response unit 307b transmits the first response signal to the initiator device 101 corresponding to the degree of reception of the received data. (1) Reception of only a part of the data by the beacon device 102, (2) transmission of Selective ACK by the beacon device 102, and (3) transmission of part of required data by the initiator device are repeated until the whole first test signal is received by the beacon device 102. Alternatively, these operations are repeated at a predetermined certain count. The number of times may be included in the contents of the wireless communication test stored in the storage device 137a.

In step S5, it is determined whether the 2.4 GHz test is ended or not. If the 2.4 GHz test is not ended (NO in step S5), the flow goes back to step S3. That is, the initiator device 101 continues transmitting the first test signal periodically for a certain period. Every time the beacon device 102 receives the first test signal, the beacon device 102 transmits the first response signal corresponding to the degree of reception of the first test signal. The first response signal is received by the initiator device 101, and a response of the beacon device 102 is determined by the test execution unit 304a. "End of test" indicates that the initiator device 101 receives from the operation terminal 104 a test end instruction to make the initiator device 101 end the wireless communication test or that the test execution unit 304a ends executing the whole contents of the wireless communication test stored in the storage device 137a.

If the 2.4 GHz test is ended (YES in step S5), the 2.4 GHz test result is supplied to the storage device 137a and stored in the storage device 137a (step S6) and is transmitted to the operation terminal 104 by the test result transmitting unit 305a (step S7). As explained above, the 2.4 GHz test result constitutes the summarized message including the information such as the type and frequency band of the test signal (message) used in the test. The test result is created based on the response determination in step S4.

Next, in step S8, it is determined whether or not the test instruction receiving unit 303a of the initiator device 101 receives a test instruction from the operation terminal 104. The test instruction makes the initiator device 101 execute the wireless communication test in the 868 MHz frequency band between the initiator device 101 and the beacon device 102 (i.e., an 868 MHz test instruction). The 868 MHz test instruction indicates the above-mentioned the second test instruction.

If the test instruction receiving unit 303a of the initiator device 101 does not receive the second test instruction (NO in step S8), the operation relating to the wireless communication test of the initiator device 101 is ended. If the initiator device 101 and the beacon device 102 are capable of mutually executing wireless communication in the 2.4 GHz frequency band, the determination of step S8 is assumed to be NO.

If the test instruction receiving unit 303a of the initiator device 101 receives the 868 MHz test instruction (YES in step S8), the test execution unit 304a starts the 868 MHz wireless communication test (868 MHz test) between the initiator device 101 and the beacon device 102 (step S9). The 868 MHz test corresponds to the above-mentioned second test. The test of 868 MHz is executed based on contents of the wireless communication test stored in the storage device 137a.

When the 868 MHz is started, the test execution unit 304a transmits the second test signal in the 868 MHz frequency band to the beacon device 102 (step S10). The test execution unit 304a determines a response from the beacon device 102 (step S11). More particularly, when the response unit 307b of the beacon device 102 receives the second test signal, the response unit 307b transmits a second response signal corresponding to the degree of reception of the first test signal to the initiator device 101. The test execution unit 304a determines whether the first response signal is received or not and, if the first response signal is received, determines the response based on the contents (ACK or Selective ACK) of the first response signal. If the second response signal is Selective ACK, the test execution unit 304a retransmits the data required to be transmitted, in the second test signal, to the beacon device 102. (1) Reception of only a part of the data by the beacon device 102, (2) transmission of Selective ACK by the beacon device 102, and (3) transmission of part of required data by the initiator device are repeated until the whole second test signal are received by the beacon device 102, as explained above. Alternatively, these operations are repeated at a predetermined certain count.

In step S12, it is determined whether the test of 868 MHz is ended or not. If the test of 2.4 GHz is not ended (NO in step S12), the flow goes back to step S10. That is, the initiator device 101 continues transmitting the second test signal periodically for a certain period. Every time the beacon device 102 receives the second test signal, the beacon device 102 transmits a second response signal corresponding to the degree of reception of the second test signal to the initiator device 101. The second response signal is received by the initiator device 101, and a response of the beacon device 102 is determined by the test execution unit 304a.

If the 868 MHz test is ended (YES in step S12), the 868 MHz test result is supplied to the storage device 137a and stored in the storage device 137a (step S13) and is transmitted to the operation terminal 104 by the test result transmitting unit 305a (step S14). As explained above, the 868 MHz test result constitutes the summarized message including the information such as the type and frequency band of the test signal (message) used in the test. The test result is created based on the response determination in step S11.

Next, in step S15, it is determined whether or not the test instruction receiving unit 303a receives the 2.4 GHz test instruction from the operation terminal 104 and, if the test instruction receiving unit 303a does not receive the 2.4 GHz test instruction from the operation terminal 104 (NO in step S15), the operation on wireless communication test of the initiator device 101 is ended. If the test instruction receiving unit 303a receives the 2.4 GHz test instruction from the operation terminal 104 (YES in step S15), the flow goes back to step S2. If the 2.4 GHz test result indicates that the initiator device 101 and the beacon device 102 are not capable of mutually executing wireless communication and the 868 MHz test result indicates that the initiator device 101 and the beacon device 102 are not capable of mutually executing wireless communication, the determination of step S15 is assumed to be YES.

The 2.4 GHz test result and the 868 MHz test result may be transmitted to not only the operation terminal 104, but also the communicator 105A in the service van 105.

FIG. 14 does not illustrate the operation of the connect button 114a but, in step S1, it may be determined not only whether the 2.4 GHz test instruction is received or not, but also whether the connect button 114a of the initiator device 101 is pressed or not. If the connect button 114a of the initiator device 101 is pressed, the test execution unit 304a may execute the first test (the 2.4 GHz test). Similarly, in step S8, it may be determined not only whether the 868 MHz test instruction is received or not, but also whether the connect button 114a of the initiator device 101 is pressed or not. If the connect button 114a of the initiator device 101 is pressed, the test execution unit 304a may execute the second test (the 868 MHz test).

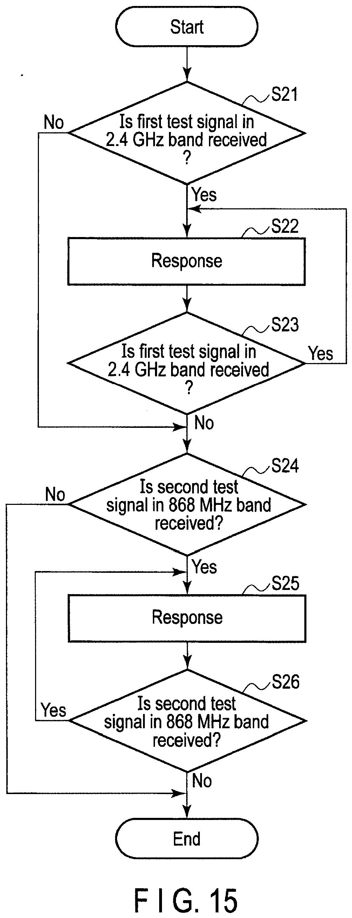

FIG. 15 is a flowchart showing the operation responding to the wireless communication test, which is executed by the test device 102 set as the beacon device (second device mode). In FIG. 15, the test device 101 is set as the initiator device and the test device 102 is set as the beacon device.

In step S21, it is determined whether or not the beacon device 102 receives the first test signal in the 2.4 GHz frequency band from the initiator device 101. If the first beacon device 102 does not receive the first test signal (NO in step S21), the flow goes to step S24. If the beacon device 102 receives the first test signal from the initiator device 101 (YES in step S21), the response unit 307a responds to the first test signal based on the degree of reception of the first test signal (step S22). More particularly, the response unit 307a transmits the first response signal corresponding to the degree of the reception to the initiator device 101. The response unit 307a transmits the first response signal that is ACK to the initiator device 101 when correctly receiving the whole first test signal, and transmits the first response signal that is Selective ACK to the initiator device 101 when correctly receiving only a part of the first test signal. If a part of the data required by Selective ACK is received from the initiator device 101, the first response signal corresponding to the degree of reception of the data is transmitted to the initiator device 101. (1) Reception of only a part of the data by the beacon device 102, (2) transmission of Selective ACK by the beacon device 102, and (3) transmission of part of required data by the initiator device are repeated until the whole first test signal is received by the beacon device 102, as explained above, or repeated at a predetermined count.

Next, in step S23, it is determined whether the first test signal is received or not.

If the beacon device 102 receives the first test signal from the initiator device 101 (YES in step S23), the response unit 307a responds to the first test signal based on the degree of reception of the first test signal (step S22). Step S22 is repeated until the first test signal is not received.

If the beacon device 102 does not receive the first test signal from the initiator device 101 (NO in step S23), it is determined whether the second test signal in the 868 MHz frequency band is received or not, in step S24. If not in step S23, it is assumed that the first test (the 2.4 GHz test) by the initiator device 101 is ended.

If the first beacon device 102 does not receive the second test signal from the initiator device 101 (NO in step S24), the operation of responding to the wireless communication test by the first beacon device 102 is ended. If the result of the 2.4 GHz wireless communication test indicates that the initiator device 101 and the first beacon device 102 are capable of mutually executing wireless communication, neither the first test or the second test is executed, or both of the first test and the second test is executed but the first beacon device 102 cannot receive any parts of the first test signal and the second test signal, the determination of step S24 is assumed to be NO.

If the beacon device 102 receives the second test signal from the initiator device 101 (YES in step S24), the response unit 307a responds to the second test signal based on the degree of reception of the second test signal (step S25). The response unit 307a transmits the second response signal corresponding to the degree of the reception to the initiator device 101. The response unit 307a transmits the second response signal that is ACK to the initiator device 101 when correctly receiving the whole second test signal, and transmits the second response signal that is Selective ACK to the initiator device 101 when correctly receiving only a part of the second test signal. If a part of the data required by Selective ACK is received from the initiator device 101, the second response signal corresponding to the degree of reception of the data is transmitted to the initiator device 101. (1) Reception of only a part of the data by the beacon device 102, (2) transmission of Selective ACK by the beacon device 102, and (3) transmission of part of required data by the initiator device are repeated until the whole second test signal is received by the beacon device 102, as explained above, or repeated at a predetermined count.

If the result of the 2.4 GHz wireless communication test indicates that the initiator device 101 and the beacon device 102 are not capable of mutually executing wireless communication, the determination of step S24 is assumed to be YES.

It is determined whether the second test signal is received or not, in step S26. If the beacon device 102 receives the second test signal from the initiator device 101 (YES in step S26), step S25 is executed. Step S25 is repeated until the second test signal is not received. If the first beacon device 102 does not receive the second test signal from the initiator device 101 (NO in step S26), the operation of responding to the wireless communication test by the first beacon device 102 is ended.

If the 2.4 GHz test result indicates that the initiator device 101 and the beacon device 102 are not capable of mutually executing wireless communication and the 868 MHz test result indicates that the initiator device 101 and the beacon device 102 are not capable of mutually executing wireless communication, the first test signal in the 2.4 GHz frequency band is transmitted from the initiator device 101 to the first beacon device 102. In this case, the operation of responding to the wireless communication test by the test device 102 as shown in FIG. 15 is executed again.

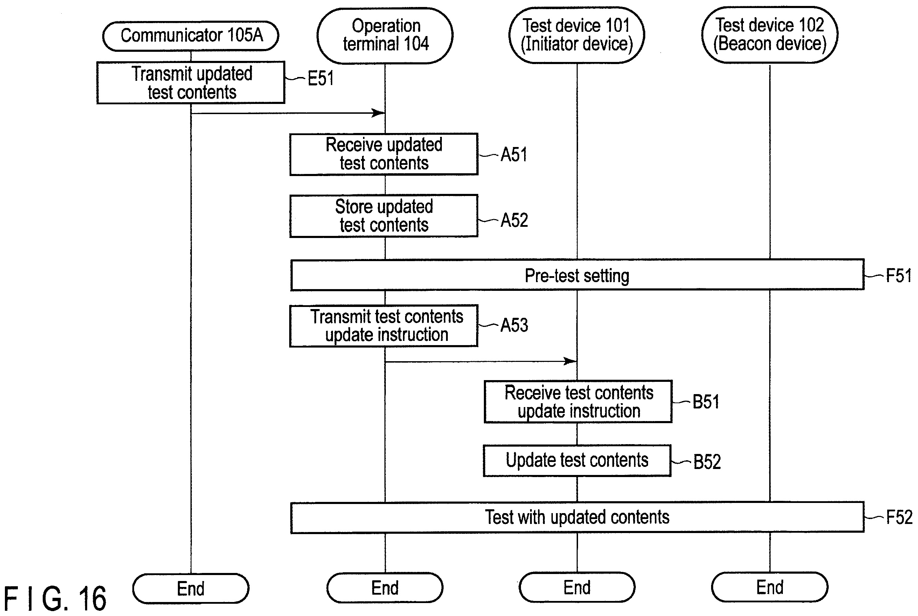

FIG. 16 is a sequence diagram showing operations relating to updating of contents of the wireless communication test executed by the wireless communication test system 100.

When the updated contents of the wireless communication test are supplied to the storage device 620 and stored in the storage device 620 of the communicator 105A in the service van 105, the test contents transmitting unit 603 transmits the stored updated contents of the wireless communication test to the operation terminal 104 (step E51). The updated contents of the wireless communication test indicate contents obtained by updating the contents of the wireless communication test that is to be executed. For example, the updated contents of the wireless communication test may be downloaded from the server 106 by the communicator 105A in the service van 105.

When the updated contents of the wireless communication test from the communicator 105A in the service van 105 are received by the operation terminal 104 (step A51), the contents are supplied to the storage device 520 and stored in the storage device 520 (step A52).

Next, the worker executes the pre-test setting operation shown in FIG. 8 and FIG. 9 with the operation terminal 104, and the test devices 101 and 102 before starting the wireless communication test (step F51). It is assumed that the test device 101 is set as the initiator device and the test device 102 is set as the beacon device.

After the pre-test setting operation is executed, the update instructing unit 506 of the operation terminal 104 transmits the test contents update instruction including the updated wireless communication test contents to the initiator device 101 (step A53). The test contents update instruction may be transmitted to the initiator device 101 when the worker operates the operation terminal 104 or the test contents update instruction may be automatically transmitted to the initiator device 101 after the pre-test setting operation is ended.

When receiving the test contents update instruction from the operation terminal 104 (step B51), the test contents updating unit 308a of the initiator device 101 updates the contents of the wireless communication test based on the test contents update instruction (step B52). The test contents updating unit 308a updates the contents of the wireless communication test by overwriting the updated contents of the wireless communication test included in the test contents update instruction, on the contents of the wireless communication test stored in the storage device 137a. The updating method is not limited to this method.

After updating the test contents, the worker executes the wireless communication test with the operation terminal 104, the initiator device 101, and the beacon device 102 (step F52). The test execution unit 304a executes the wireless communication test based on the contents of the wireless communication test (updated contents) stored in the storage device 137a. The other operations are the same as the operations shown in FIG. 11 and FIG. 12.

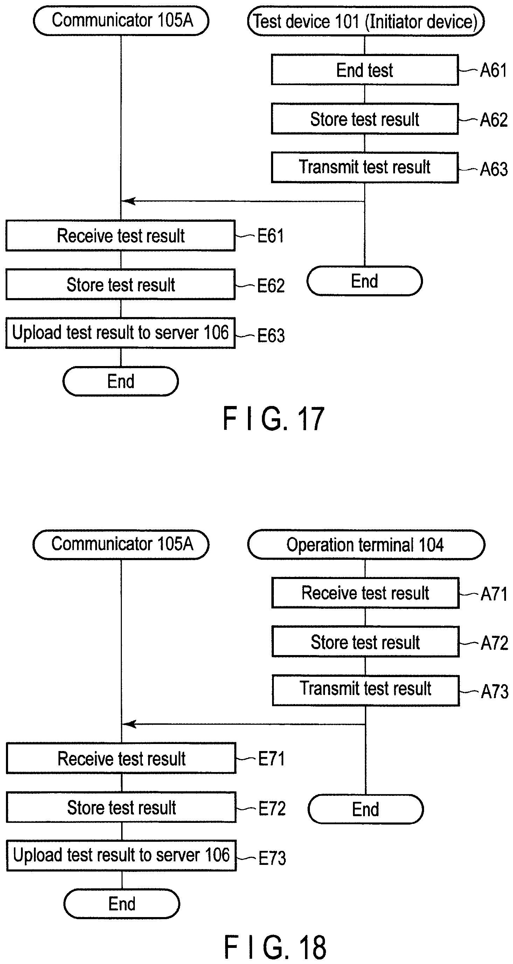

FIG. 17 is a sequence diagram showing an operation of acquiring the result of the wireless communication test from the initiator device (test device) by the communicator 105A in the service van 105. It is assumed that the test device 101 is set as the initiator device and the test device 102 is set as the beacon device.

The worker drives the communicator 105A in the service van 105 when visiting each house to install the communication hub 20, the meters 1, 2, and 3, and the IHD 4. The communicator 105A in the service van 105 and the initiator device 101 can execute wireless communication by Wi-Fi communication function or Bluetooth communication function as explained above. For this reason, the communicator 105A in the service van 105 can acquire the wireless communication test result, directly, from the initiator device 101.

When 2.4 GHz or 868 MHz wireless communication test executed by the test execution unit 304a of the initiator device 101 is ended (step A61), its test result is supplied to the storage device 137a and stored in the storage device 137a (step A62). Then, the test result transmitting unit 305a transmits the result of the executed test to the communicator 105A in the service van 105 (step A63). The test result is transmitted by Wi-Fi communication function or Bluetooth communication function.

In the communicator 105A in the service van 105, the test result acquisition unit 601 acquires the test result from the initiator device 101 (step E61). Then, the test result acquired by the test result acquisition unit 601 is supplied to the storage device 620 and stored in the storage device 620 (step E62). The upload unit 602 uploads the test result acquired by the test result acquisition unit 601 to the server 106 (step E63).

FIG. 18 is a sequence diagram showing an operation of acquiring the result of the wireless communication test from the operation terminal 104 by the communicator 105A in the service van 105. It is assumed that the test device 101 is set as the initiator device and the test device 102 is set as the beacon device.

As explained above, the communicator 105A in the service van 105 and the initiator device 101 can execute wireless communication by Wi-Fi communication function or Bluetooth communication function but, the communicator 105A in the service van 105 does not always acquire the wireless communication test result, directly, from the initiator device 101. For example, it is assumed that the wireless communication test is executed at a location remote from the communicator 105A in the service van 105. In this case, the communicator 105A in the service van 105 acquires the result of the communication test via the operation terminal 104.

When the test result receiving unit 504 of the operation terminal 104 receives the result of the executed wireless communication test from the initiator device 101 (step A71), the test result is supplied to the storage device 520 and stored in the storage device 520 (step A72). Then, the test result transmitting unit 507 transmits the test result received from the initiator device 101 to the communicator 105A in the service van 105 (step A73). The test result is transmitted by Wi-Fi communication function or Bluetooth communication function.

In the communicator 105A in the service van 105, the test result acquisition unit 601 acquires the test result from the operation terminal 104 (step E71). Steps E72 and E73 correspond to steps E62 and E63 in FIG. 17, respectively.

The test result may be uploaded directly from the operation terminal 104 to the server 106. In this case, the upload unit 508 of the operation terminal 104 uploads the result of the wireless communication test received from the initiator device 101 by the test result receiving unit 504, to the server 106.

In FIG. 17 and FIG. 18, when the test result is uploaded to the server 106, the test result may be uploaded from the communicator 105A in the service van 105 or the operation terminal 104 together with the test conditions. The test conditions include an address of a building such as a house where the wireless communication test is executed, the frequency band (2.4 GHz or 868 MHz), the identification numbers of the test devices used, the installation locations of the respective test devices (location information such as locations close to the communication hub, the gas meter, and IHD), and the like. In this case, the server 106 manages the frequency bands of the communication hub 20, the meters, and the like to be installed in each house. The worker may input the test conditions to the operation terminal 104 when the worker executes the test. In this case, the test conditions may be transmitted from the operation terminal 104 to the communicator 105A in the service van 105 together with the test result, and may be stored in the storage device 620 in the communicator 105A in the service van 105 together with the test result.

When the light control units 306a, 306b, and 306c make the LEDs (W/B LEDs, ZB LEDs, and S/P LEDs) light, the light control units 306a, 306b, and 306c make the LEDs light in colors other than the colors shown in FIG. 7A, FIG. 7B, and FIG. 7C or blink in frequency shown in FIG. 7A, FIG. 7B, and FIG. 7C. The W/B LEDs 111a, 111b, and 111c may light such that at least pairing, pairing completed, and the error state can be distinguished. The ZBs LED 112a, 112b, and 112c may light such that at least executing the test, test completed, and the error state can be distinguished. The S/P LEDs 113a, 113b, and 113c may light such that the each of states of charge (charging, fully charged, low battery, and the like) of the batteries 124a, 124b, and 124c, and the system error state can be distinguished. This is because the lighting modes of the S/P LEDs 113a, 113b, and 113c indicate the states of charge and the error state for the worker.

Either of the 2.4 GHz wireless communication test and the 868 MHz wireless communication test may be first executed.

As explained above, according to the embodiment, the test instruction is transmitted from the operation terminal 104 to the test device set as the initiator device, and the wireless communication test can be executed between the initiator device and the test device set as the beacon device in a specific frequency band. Thus, if the initiator device is arranged near the communication hub 20 and the beacon devices are arranged near the meter (the gas meter 2, the electricity meter 3, or the water meter 1) or IHD 4, and the wireless communication test is executed, the worker can recognize whether the communication hub 20, the meter, and the like are capable of mutually executing wireless communication in the specific frequency band or not, before installing the communication hub 20, the meters 1, 2, and 3, and the like. The worker can therefore recognize a type of the communication hub 20, the meters 1, 2, and 3, and the like (the single-band device or the dual-band device) that are to be installed. Since the test devices 101, 102, and 103 are different from the communication hub 20, the meters 1, 2, and 3, and the like, but are capable of wireless communication in the same frequency band as the communication hub 20, the meters 1, 2, and 3, and the like, the wireless communication test can be executed without actually installing the communication hub 20 and the meter and the like, by executing the wireless communication test using the test devices 101, 102, and 103. The worker can therefore execute the wireless communication test without suspending use of gas, electricity, and the like. The work time of installing the communication hub 20, the meters 1, 2, and 3, and the like can be reduced as compared with once installing arbitrary communication hub 20 and the meter and the like and exchanging them for other communication hub 20 and other meters and the like in a case where they are not capable of mutually executing wireless communication. Increase in inconvenience to persons provided with gas, electricity, and the like can be therefore prevented. Furthermore, the costs can be lowered as compared with installing communication hub 20, the meters 1, 2, and 3, and the like that conform to any frequency bands, at all houses and the like.

Since the initiator device can execute the wireless communication test with plural beacon devices, the wireless communication test can be executed more efficiently in a case where meters and the like are installed besides the communication hub 20.

The test device can be set as any of the initiator device and the beacon device. For example, even if the test device used as the initiator device is broken, the wireless communication test can be executed with the remaining test devices by resetting one of the test devices used as the beacon devices, as the initiator device.

If the operation terminal 104 transmits the instruction for updating the wireless communication test contents including the updated wireless communication test contents, to the initiator device, the initiator device can update the test contents. Therefore, if the wireless communication test contents are updated, the wireless communication test can be executed with the updated contents.

Since the initiator device transmits the test result to the operation terminal 104 and the communicator 105A in the service van 105 when the wireless communication test is ended, the operation terminal 104 and the communicator 105A in the service van 105 can acquire the test result. Since the operation terminal 104 transmits the test result acquired from the initiator device to the communicator 105A in the service van 105, the communicator 105A in the service van 105 can acquire the test result via the operation terminal 104 even if the communicator 105A in the service van 105 cannot acquire the test result directly from the initiator device.

Since each of the test devices 101, 102, and 103 includes the battery 124a, 124b, and 124c, respectively, the wireless communication test can be executed in a condition in which the power cannot be externally supplied.

When the operation terminal 104 and the communicator 105A in the service van 105 upload the test result to the server 106, the server 106 can acquire the test result. The server 106 may acquire the address of the building such as house where the wireless communication test is executed, the frequency band (2.4 GHz or 868 MHz), the identification numbers of the test devices used, the installation locations of the respective test devices (location information such as locations close to the communication hub 20, the gas meter, and IHD), and the like, together with the test result. Therefore, the server 106 can manage the frequency bands of the communication hub 20, the meters 1, 2, and 3, and the like to be installed in each house. Based on a managed data, when work of exchanging the communication hubs 20, the meters, and the like is executed, the exchange work time can be reduced.

Furthermore, since ZB LEDs 112a, 112b, and 112c light in different lighting modes while the wireless communication test is being executed and when the wireless communication test has been ended, the worker can recognize whether the wireless communication test is being executed or the wireless communication test has been ended, by watching the test device. Since ZB LEDs 112a, 112b, and 112c light in different lighting modes in a case where the test devices are capable of mutually executing wireless communication and a case where the test devices 101, 102, and 103 are not capable of mutually executing wireless communication, the worker can recognize the result of the wireless communication test by watching the test device.

Since S/P LEDs 113a, 113b, and 113c light in the lighting modes that the states of charge (charging, fully charged, low battery, and the like) of the batteries and the system error state can be distinguished, the S/P LEDs 113a, 113b, and 113c can notify the worker of the state of charge of and the error state of the test devices 101, 102, and 103. If the operation terminal 104 transmits the test instructions to the plurality of the test devices, the test devices receiving the test instruction may execute the wireless communication test corresponding to the test instruction and transmit a result of the wireless communication test to the operation terminal 104. In this case, for example, the third test may be a test for determining whether the test device 103 and the at least one of the test device 101 or the test device 102 are capable of mutually executing wireless communication in the 2.4 GHz frequency band or not. And the fourth test may be a test for determining whether the test device 103 and the at least one of the test device 101 or the test device 102 are capable of mutually executing wireless communication in the 868 MHz frequency band or not. The operation terminal 104 may transmit the second instruction to a test device other than a test device that receives the first instruction. The operation terminal 104 may transmit the fourth instruction to a test device other than a test device that receives the third instruction.

## Claims

1. A system comprising:
a first electronic device (101, 102, and 103) comprising a communication unit (139a, 139b, and 139c) capable of wireless communication in a first frequency band and a communication unit (139a, 139b, and 139c) capable of wireless communication in a second frequency band; and
a second electronic device (101, 102, and 103) comprising a communication unit (139a, 139b, and 139c) capable of wireless communication in the first frequency band and a communication unit (139a, 139b, and 139c) capable of wireless communication in the second frequency band,
**characterized by** further comprising:
a third electronic device (104) that transmits a first instruction to a first one of the first electronic device (101, 102, and 103) or the second electronic device (101, 102, and 103),
wherein
the first one of the first electronic device (101, 102, and 103) or the second electronic device receives the first instruction and executes a first test, the first test comprising transmitting a first test signal to the second one of the first electronic device (101, 102, and 103) or the second electronic device in the first frequency band,
the second one of the first electronic device (101, 102, and 103) or the second electronic device receives the first test signal and transmits a first response signal to the first one of the first electronic device (101, 102, and 103) or the second electronic device in the first frequency band, the first response signal indicating a success or a failure of reception of the first test signal, and
the first one of the first electronic device (101, 102, and 103) or the second electronic device (101, 102, and 103) receives the first response signal and transmits the first response signal to the third electronic device (104).

2. The system of Claim 1, **characterized in that**
the third electronic device (104) receives the first response signal and transmits a second instruction to the first one of the first electronic device (101, 102, and 103) or the second electronic device (101, 102, and 103) when the first response signal indicates a failure of reception of the first test signal,
the first one of the first electronic device (101, 102, and 103) or the second electronic device receives the second instruction and executes a second test, the second test comprising transmitting a second test signal to the second one of the first electronic device (101, 102, and 103) or the second electronic device in the second frequency band,
the second one of the first electronic device (101, 102, and 103) or the second electronic device receives the second test signal and transmits a second response signal to the first one of the first electronic device (101, 102, and 103) or the second electronic device in the second frequency band, the second response signal indicating a success or a failure of reception of the second test signal, and
the first one of the first electronic device (101, 102, and 103) or the second electronic device (101, 102, and 103) receives the second response signal and transmits the second response signal to the third electronic device (104).

3. The system of Claim 1, **characterized by** further comprising:
a fourth electronic device (101, 102, and 103) comprising a communication unit (139a, 139b, and 139c) capable of wireless communication in the first frequency band and a communication unit (139a, 139b, and 139c) capable of wireless communication in the second frequency band,
wherein
the third electronic device (104) transmits a third instruction to the first one of the first electronic device (101, 102, and 103) or the second electronic device (101, 102, and 103),
the first one of the first electronic device (101, 102, and 103) or the second electronic device receives the third instruction and executes a third test, the third test comprising transmitting a third test signal to the fourth electronic device (101, 102, and 103) in the first frequency band,
the fourth electronic device receives the third test signal and transmits a third response signal to the first one of the first electronic device (101, 102, and 103) or the second electronic device in the first frequency band, the third response signal indicating a success or a failure of reception of the third test signal, and
the first one of the first electronic device (101, 102, and 103) or the second electronic device (101, 102, and 103) receives the third response signal and transmits the third response signal to the third electronic device (104).

4. The system of Claim 3, **characterized in that**
the third electronic device (104) receives the third response signal and transmits a fourth instruction to the first one of the first electronic device (101, 102, and 103) or the second electronic device (101, 102, and 103) when the third response signal indicates a failure of reception of the third test signal,
the first one of the first electronic device (101, 102, and 103) or the second electronic device receives the fourth instruction and executes a fourth test, the fourth test comprising transmitting a fourth test signal to the second one of the first electronic device (101, 102, and 103) or the second electronic device in the second frequency band,
the second one of the first electronic device (101, 102, and 103) or the second electronic device receives the fourth test signal and transmits a fourth response signal to the first one of the first electronic device (101, 102, and 103) or the second electronic device in the second frequency band, the fourth response signal indicating a success or a failure of reception of the fourth test signal, and
the first one of the first electronic device (101, 102, and 103) or the second electronic device (101, 102, and 103) receives the fourth response signal and transmits the fourth response signal to the third electronic device (104).

5. The system of Claim 1, **characterized in that**
the third electronic device (104) transmits an instruction for updating the first test to the first one of the first electronic device (101, 102, and 103) or the second electronic device (101, 102, and 103), and
the first one of the first electronic device (101, 102, and 103) or the second electronic device (101, 102, and 103) receives the update instruction and updates the first test based on the update instruction.

6. The system of Claim 1, **characterized by** further comprising:
a fifth electronic device (105) that transmits contents of the first test to the third electronic device (104),
wherein
the third electronic device (104) receives the contents of the first test and transmits an instruction for updating the first test to the first one of the first electronic device (101, 102, and 103) or the second electronic device (101, 102, and 103) based on received contents of the first test.

7. The system of Claim 1, **characterized in that**
the first frequency band is 2.4 GHz band and the second frequency band is 868 MHz band.

8. The system of Claim 1, **characterized in that**
each of the first electronic device (101, 102, and 103) and the second electronic device (101, 102, and 103) further comprises a rechargeable battery (124a, 124b, and 124c).

9. The system of Claim 8, **characterized in that**
each of the first electronic device (101, 102, and 103) and the second electronic device (101, 102, and 103) comprises a light unit (113a, 113b, and 113c) that lights in a lighting mode corresponding to a state of charge of the rechargeable battery (124a, 124b, and 124c).

10. The system of Claim 1, **characterized by** further comprising:
a sixth electronic device (105) that receives the first response signal from the first one of the first electronic device (101, 102, and 103) or the second electronic device (101, 102, and 103) and uploads the first response signal to a server (106).

11. The system of Claim 10, **characterized in that**
the third electronic device (104) uploads the first response signal to the server (106).

12. The system of Claim 1, **characterized in that**
at least one of the first electronic device (101, 102, and 103) or the second electronic device (101, 102, and 103) comprises a light unit (112a, 112b, and 112c) that lights in a first lighting mode while the first test is being executed and lights in a second lighting mode when execution of the first test is ended.

13. The system of Claim 1, **characterized in that**
at least one of the first electronic device (101, 102, and 103) or the second electronic device (101, 102, and 103) comprises a light unit (112a, 112b, and 112c) that lights in a first lighting mode while the first test is being executed, that lights in a second lighting mode when the first response signal indicates a success of reception of the first test signal, and that lights in a third lighting mode when the first response signal indicates a failure of reception of the first test signal.

14. An electronic device comprising a communication unit (139a, 139b, and 139c) capable of wireless communication in a first frequency band and a second frequency band,
**characterized in that**
the electronic device is configured to be set as an initiator device or a beacon device;
the electronic device (101) set as the initiator device is configured to execute a first test, when receiving a first instruction from a control device (104), the first test comprising transmitting a first test signal to the electronic device (102, 103) set as the beacon device in the first frequency band;
the electronic device (101) set as the initiator device is configured to transmit a response signal to the control device (104), when receiving the response signal from the electronic device (102, 103) set as the beacon device in the first frequency band, the response signal indicating a success or a failure of reception of the first test signal by the electronic device (102, 103) set as the beacon device; and
the electronic device (101) set as the initiator device is configured to execute a second test, when receiving a second instruction from the control device (104), the second test comprising transmitting a second test signal to the electronic device (102, 103) set as the beacon device in the second frequency band.

15. A test method for a system comprising:
a first electronic device (101, 102, and 103) comprising a communication unit (139a, 139b, and 139c) capable of wireless communication in a first frequency band and a second frequency band;
a second electronic device (101, 102, and 103) comprising a communication unit (139a, 139b, and 139c) capable of wireless communication in a first frequency band and a second frequency band; and
a third electronic device (104),
the test method **characterized by**
transmitting an instruction by the third electronic device (104) to a first one of the first electronic device (101, 102, and 103) or the second electronic device (101, 102, and 103),
executing a test by the first one of the first electronic device (101, 102, and 103) or the second electronic device, the test comprising transmitting a test signal to a second one of the first electronic device (101, 102, and 103) or the second electronic device (101, 102, and 103) in the first frequency band after receiving the instruction,
transmitting a response signal by the second one of the first electronic device (101, 102, and 103) or the second electronic device (101, 102, and 103) to the first one of the first electronic device (101, 102, and 103) or the second electronic device in the first frequency band after receiving the test signal, the response signal indicating a success or a failure of reception of the test signal, and
transmitting the response signal by the first one of the first electronic device (101, 102, and 103) or the second electronic device (101, 102, and 103) to the third electronic device (104) after receiving the response signal.

## Patentansprüche

1. Ein System, das Folgendes aufweist:
eine erste elektronische Vorrichtung (101, 102 und 103) mit einer Kommunikationseinheit (139a, 139b und 139c), die zur drahtlosen Kommunikation in einem ersten Frequenzband fähig ist, und einer Kommunikationseinheit (139a, 139b und 139c), die zur drahtlosen Kommunikation in einem zweiten Frequenzband fähig ist; und
eine zweite elektronische Vorrichtung (101, 102 und 103) mit einer Kommunikationseinheit (139a, 139b und 139c), die zur drahtlosen Kommunikation in dem ersten Frequenzband fähig ist, und einer Kommunikationseinheit (139a, 139b und 139c), die zur drahtlosen Kommunikation in dem zweiten Frequenzband fähig ist,
**dadurch gekennzeichnet, dass** es ferner aufweist:
eine dritte elektronische Vorrichtung (104), die eine erste Anweisung an eine erste der ersten elektronischen Vorrichtung (101, 102 und 103) oder der zweiten elektronischen Vorrichtung (101, 102 und 103) überträgt,
wobei
die erste der ersten elektronischen Vorrichtung (101, 102 und 103) oder der zweiten elektronischen Vorrichtung die erste Anweisung empfängt und einen ersten Test ausführt, wobei der erste Test ein Übertragen eines ersten Testsignals an die zweite der ersten elektronischen Vorrichtung (101, 102 und 103) oder der zweiten elektronischen Vorrichtung in dem ersten Frequenzband aufweist,
die zweite der ersten elektronischen Vorrichtung (101, 102 und 103) oder der zweiten elektronischen Vorrichtung das erste Testsignal empfängt und ein erstes Antwortsignal an die erste der ersten elektronischen Vorrichtung (101, 102 und 103) oder der zweiten elektronischen Vorrichtung in dem ersten Frequenzband überträgt, wobei das erste Antwortsignal einen Erfolg oder einen Misserfolg beim Empfang des ersten Testsignals anzeigt, und
die erste der ersten elektronischen Vorrichtung (101, 102 und 103) oder der zweiten elektronischen Vorrichtung (101, 102 und 103) das erste Antwortsignal empfängt und das erste Antwortsignal an die dritte elektronische Vorrichtung (104) überträgt.

2. Das System nach Anspruch 1, **dadurch gekennzeichnet, dass**
die dritte elektronische Vorrichtung (104) das erste Antwortsignal empfängt und eine zweite Anweisung an die erste der ersten elektronischen Vorrichtung (101, 102 und 103) oder der zweiten elektronischen Vorrichtung (101, 102 und 103) überträgt, wenn das erste Antwortsignal einen Erfolg beim Empfang des ersten Testsignals anzeigt,
die erste der ersten elektronischen Vorrichtung (101, 102 und 103) oder der zweiten elektronischen Vorrichtung die zweite Anweisung empfängt und einen zweiten Test ausführt, wobei der zweite Test ein Übertragen eines zweiten Testsignals an die zweite der ersten elektronischen Vorrichtung (101, 102 und 103) oder der zweiten elektronischen Vorrichtung in dem zweiten Frequenzband aufweist,
die zweite der ersten elektronischen Vorrichtung (101, 102 und 103) oder der zweiten elektronischen Vorrichtung das zweite Testsignal empfängt und ein zweites Antwortsignal an die erste der ersten elektronischen Vorrichtung (101, 102 und 103) oder der zweiten elektronischen Vorrichtung in dem zweiten Frequenzband überträgt, wobei das zweite Antwortsignal einen Erfolg oder einen Misserfolg beim Empfang des zweiten Testsignals anzeigt, und
die erste der ersten elektronischen Vorrichtung (101, 102 und 103) oder der zweiten elektronischen Vorrichtung (101, 102 und 103) das zweite Antwortsignal empfängt und das zweite Antwortsignal an die dritte elektronische Vorrichtung (104) überträgt.

3. Das System nach Anspruch 1, **dadurch gekennzeichnet, dass** es ferner aufweist:
eine vierte elektronische Vorrichtung (101, 102 und 103) mit einer Kommunikationseinheit (139a, 139b und 139c), die zur drahtlosen Kommunikation in dem ersten Frequenzband fähig ist, und einer Kommunikationseinheit (139a, 139b und 139c), die zur drahtlosen Kommunikation in dem zweiten Frequenzband fähig ist,
wobei
die dritte elektronische Vorrichtung (104) eine dritte Anweisung an die erste der ersten elektronischen Vorrichtung (101, 102 und 103) oder der zweiten elektronischen Vorrichtung (101, 102 und 103) überträgt,
die erste der ersten elektronischen Vorrichtung (101, 102 und 103) oder der zweiten elektronischen Vorrichtung die dritte Anweisung empfängt und einen dritten Test ausführt, wobei der dritte Test ein Übertragen eines dritten Testsignals an die vierte elektronische Vorrichtung (101, 102 und 103) in dem ersten Frequenzband aufweist,
die vierte elektronische Vorrichtung das dritte Testsignal empfängt und ein drittes Antwortsignal an die erste der ersten elektronischen Vorrichtung (101, 102 und 103) oder der zweiten elektronischen Vorrichtung in dem ersten Frequenzband überträgt, wobei das dritte Antwortsignal einen Erfolg oder einen Misserfolg beim Empfang des dritten Testsignals anzeigt, und
die erste der ersten elektronischen Vorrichtung (101, 102 und 103) oder der zweiten elektronischen Vorrichtung (101, 102 und 103) das dritte Antwortsignal empfängt und das dritte Antwortsignal an die dritte elektronische Vorrichtung (104) überträgt.

4. Das System nach Anspruch 3, **dadurch gekennzeichnet, dass**
die dritte elektronische Vorrichtung (104) das dritte Antwortsignal empfängt und eine vierte Anweisung an die erste der ersten elektronischen Vorrichtung (101, 102 und 103) oder der zweiten elektronischen Vorrichtung (101, 102 und 103) überträgt, wenn das dritte Antwortsignal einen Misserfolg beim Empfang des dritten Testsignals anzeigt,
die erste der ersten elektronischen Vorrichtung (101, 102 und 103) oder der zweiten elektronischen Vorrichtung die vierte Anweisung empfängt und einen vierten Test ausführt, wobei der vierte Test ein Übertragen eines vierten Testsignals an die zweite der ersten elektronischen Vorrichtung (101, 102 und 103) oder der zweiten elektronischen Vorrichtung in dem zweiten Frequenzband aufweist,
die zweite der ersten elektronischen Vorrichtung (101, 102 und 103) oder der zweiten elektronischen Vorrichtung das vierte Testsignal empfängt und ein viertes Antwortsignal an die erste der ersten elektronischen Vorrichtung (101, 102 und 103) oder der zweiten elektronischen Vorrichtung in dem zweiten Frequenzband überträgt, wobei das vierte Antwortsignal einen Erfolg oder einen Misserfolg beim Empfang des vierten Testsignals anzeigt, und
die erste der ersten elektronischen Vorrichtung (101, 102 und 103) oder der zweiten elektronischen Vorrichtung (101, 102 und 103) das vierte Antwortsignal empfängt und das vierte Antwortsignal an die dritte elektronische Vorrichtung (104) überträgt.

5. Das System nach Anspruch 1, **dadurch gekennzeichnet, dass**
die dritte elektronische Vorrichtung (104) eine Anweisung zum Aktualisieren des ersten Tests an die erste der ersten elektronischen Vorrichtung (101, 102 und 103) oder der zweiten elektronischen Vorrichtung (101, 102 und 103) überträgt, und
die erste der ersten elektronischen Vorrichtung (101, 102 und 103) oder der zweiten elektronischen Vorrichtung (101, 102 und 103) die Aktualisierungsanweisung empfängt und den ersten Test basierend auf der Aktualisierungsanweisung aktualisiert.

6. Das System nach Anspruch 1, **dadurch gekennzeichnet, dass** es ferner aufweist:
eine fünfte elektronische Vorrichtung (105), die Inhalte des ersten Tests an die dritte elektronische Vorrichtung (104) überträgt,
wobei
die dritte elektronische Vorrichtung (104) die Inhalte des ersten Tests empfängt und eine Anweisung zum Aktualisieren des ersten Tests an die erste der ersten elektronischen Vorrichtung (101, 102 und 103) oder der zweiten elektronischen Vorrichtung (101, 102 und 103) basierend auf empfangenen Inhalten des ersten Tests überträgt.

7. Das System nach Anspruch 1, **dadurch gekennzeichnet, dass**
das erste Frequenzband ein 2,4-GHz-Band und das zweite Frequenzband ein 868-MHz-Band ist.

8. Das System nach Anspruch 1, **dadurch gekennzeichnet, dass**
sowohl die erste elektronische Vorrichtung (101, 102 und 103) als auch die zweite elektronische Vorrichtung (101, 102 und 103) ferner eine wiederaufladbare Batterie (124a, 124b und 124c) aufweist.

9. Das System nach Anspruch 8, **dadurch gekennzeichnet, dass**
sowohl die erste elektronische Vorrichtung (101, 102 und 103) als auch die zweite elektronische Vorrichtung (101, 102 und 103) eine Beleuchtungseinheit (113a, 113b und 113c) aufweist, die in einem Beleuchtungsmodus leuchtet, der zu einem Ladezustand der wiederaufladbaren Batterie (124a, 124b und 124c) korrespondiert.

10. Das System nach Anspruch 1, **dadurch gekennzeichnet, dass** es ferner aufweist:
eine sechste elektronische Vorrichtung (105), die das erste Antwortsignal von der ersten der ersten elektronischen Vorrichtung (101, 102 und 103) oder der zweiten elektronischen Vorrichtung (101, 102 und 103) empfängt und das erste Antwortsignal zu einem Server (106) hochlädt.

11. Das System nach Anspruch 10, **dadurch gekennzeichnet, dass**
die dritte elektronische Vorrichtung (104) das erste Antwortsignal zu dem Server (106) hochlädt.

12. Das System nach Anspruch 1, **dadurch gekennzeichnet, dass**
mindestens eine der ersten elektronischen Vorrichtung (101, 102 und 103) oder der zweiten elektronischen Vorrichtung (101, 102 und 103) eine Beleuchtungseinheit (112a, 112b und 112c) aufweist, die in einem ersten Beleuchtungsmodus leuchtet, während der erste Test ausgeführt wird, und in einem zweiten Beleuchtungsmodus leuchtet, wenn eine Ausführung des ersten Tests beendet ist.

13. Das System nach Anspruch 1, **dadurch gekennzeichnet, dass**
mindestens eine der ersten elektronischen Vorrichtung (101, 102 und 103) oder der zweiten elektronischen Vorrichtung (101, 102 und 103) eine Beleuchtungseinheit (112a, 112b und 112c) aufweist, die in einem ersten Beleuchtungsmodus leuchtet, während der erste Test ausgeführt wird, die in einem zweiten Beleuchtungsmodus leuchtet, wenn das erste Antwortsignal einen Erfolg beim Empfang des ersten Testsignals anzeigt, und die in einem dritten Beleuchtungsmodus leuchtet, wenn das erste Antwortsignal einen Misserfolg beim Empfang des ersten Testsignals anzeigt.

14. Eine elektronische Vorrichtung mit einer Kommunikationseinheit (139a, 139b und 139c), die zur drahtlosen Kommunikation in einem ersten Frequenzband und einem zweiten Frequenzband fähig ist,
**dadurch gekennzeichnet, dass**
die elektronische Vorrichtung konfiguriert ist, um als eine Initiatorvorrichtung oder als eine Bakenvorrichtung eingestellt zu werden;
die elektronische Vorrichtung (101), die als die Initiatorvorrichtung eingestellt ist, konfiguriert ist, um einen ersten Test auszuführen, wenn sie eine erste Anweisung von einer Steuervorrichtung (104) empfängt, wobei der erste Test ein Übertragen eines ersten Testsignals an die elektronische Vorrichtung (102, 103), die als die Bakenvorrichtung eingestellt ist, in dem ersten Frequenzband aufweist;
die elektronische Vorrichtung (101), die als die Initiatorvorrichtung eingestellt ist, konfiguriert ist, um ein Antwortsignal an die Steuervorrichtung (104) zu übertragen, wenn das Antwortsignal von der elektronischen Vorrichtung (102, 103), die als die Bakenvorrichtung eingestellt ist, in dem ersten Frequenzband empfangen wird, wobei das Antwortsignal einen Erfolg oder einen Misserfolg beim Empfang des ersten Testsignals durch die elektronische Vorrichtung (102, 103), die als die Bakenvorrichtung eingestellt ist, anzeigt; und
die elektronische Vorrichtung (101), die als die Initiatorvorrichtung eingestellt ist, konfiguriert ist, um einen zweiten Test auszuführen, wenn sie eine zweite Anweisung von der Steuervorrichtung (104) empfängt, wobei der zweite Test ein Übertragen eines zweiten Testsignals an die elektronische Vorrichtung (102, 103), die als die Bakenvorrichtung eingestellt ist, in dem zweiten Frequenzband aufweist.

15. Ein Testverfahren für ein System, das Folgendes aufweist:
eine erste elektronische Vorrichtung (101, 102 und 103) mit einer Kommunikationseinheit (139a, 139b und 139c), die zur drahtlosen Kommunikation in einem ersten Frequenzband und einem zweiten Frequenzband fähig ist;
eine zweite elektronische Vorrichtung (101, 102 und 103) mit einer Kommunikationseinheit (139a, 139b und 139c), die zur drahtlosen Kommunikation in einem ersten Frequenzband und einem zweiten Frequenzband fähig ist; und
eine dritte elektronische Vorrichtung (104),
wobei das Testverfahren **dadurch gekennzeichnet ist, dass** es Folgendes aufweist:
Übertragen einer Anweisung durch die dritte elektronische Vorrichtung (104) an eine erste der ersten elektronischen Vorrichtung (101, 102 und 103) oder der zweiten elektronischen Vorrichtung (101, 102 und 103),
Ausführen eines Tests durch die erste der ersten elektronischen Vorrichtung (101, 102 und 103) oder der zweiten elektronischen Vorrichtung, wobei der Test ein Übertragen eines Testsignals an eine zweite der ersten elektronischen Vorrichtung (101, 102 und 103) oder der zweiten elektronischen Vorrichtung (101, 102 und 103) in dem ersten Frequenzband nach einem Empfang der Anweisung aufweist,
Übertragen eines Antwortsignals durch die zweite der ersten elektronischen Vorrichtung (101, 102 und 103) oder der zweiten elektronischen Vorrichtung (101, 102 und 103) an die erste der ersten elektronischen Vorrichtung (101, 102 und 103) oder der zweiten elektronischen Vorrichtung in dem ersten Frequenzband nach einem Empfang des Testsignals, wobei das Antwortsignal einen Erfolg oder einen Misserfolg beim Empfang des Testsignals anzeigt, und
Übertragen des Antwortsignals durch die erste der ersten elektronischen Vorrichtung (101, 102 und 103) oder der zweiten elektronischen Vorrichtung (101, 102 und 103) an die dritte elektronische Vorrichtung (104) nach einem Empfang des Antwortsignals.

## Revendications

1. Système comprenant :
un premier dispositif électronique (101, 102, et 103) comprenant une unité de communication (139a, 139b, et 139c) en mesure de communiquer sans fil dans une première bande de fréquences et une unité de communication (139a, 139b, et 139c) en mesure de communiquer sans fil dans une deuxième bande de fréquences ; et
un deuxième dispositif électronique (101, 102, et 103) comprenant une unité de communication (139a, 139b, et 139c) en mesure de communiquer sans fil dans la première bande de fréquences et une unité de communication (139a, 139b, et 139c) en mesure de communiquer sans fil dans la deuxième bande de fréquences,
**caractérisé en ce qu'**il comprend en outre :
un troisième dispositif électronique (104) qui transmet une première instruction à un premier du premier dispositif électronique (101, 102, et 103) ou du deuxième dispositif électronique (101, 102, et 103), dans lequel
le premier du premier dispositif électronique (101, 102, et 103) ou du deuxième dispositif électronique reçoit la première instruction et exécute un premier test, le premier test comprenant la transmission d'un premier signal de test au deuxième du premier dispositif électronique (101, 102, et 103) ou du deuxième dispositif électronique dans la première bande de fréquences,
le deuxième du premier dispositif électronique (101, 102, et 103) ou du deuxième dispositif électronique reçoit le premier signal de test et transmet un premier signal de réponse au premier du premier dispositif électronique (101, 102, et 103) ou du deuxième dispositif électronique dans la première bande de fréquences, le premier signal de réponse indiquant un succès ou un échec de la réception du premier signal de test, et
le premier du premier dispositif électronique (101, 102, et 103) ou du deuxième dispositif électronique (101, 102, et 103) reçoit le premier signal de réponse et transmet le premier signal de réponse au troisième dispositif électronique (104).

2. Système selon la revendication 1, **caractérisé en ce que**
le troisième dispositif électronique (104) reçoit le premier signal de réponse et transmet une deuxième instruction au premier du premier dispositif électronique (101, 102, et 103) ou du deuxième dispositif électronique (101, 102, et 103) lorsque le premier signal de réponse indique un échec de la réception du premier signal de test,
le premier du premier dispositif électronique (101, 102, et 103) ou du deuxième dispositif électronique reçoit la deuxième instruction et exécute un deuxième test, le deuxième test comprenant la transmission d'un deuxième signal de test au deuxième du premier dispositif électronique (101, 102, et 103) ou du deuxième dispositif électronique dans la deuxième bande de fréquences,
le deuxième du premier dispositif électronique (101, 102, et 103) ou du deuxième dispositif électronique reçoit le deuxième signal de test et transmet un deuxième signal de réponse au premier du premier dispositif électronique (101, 102, et 103) ou du deuxième dispositif électronique dans la deuxième bande de fréquences, le deuxième signal de réponse indiquant un succès ou un échec de la réception du deuxième signal de test, et
le premier du premier dispositif électronique (101, 102, et 103) ou du deuxième dispositif électronique (101, 102, et 103) reçoit le deuxième signal de réponse et transmet le deuxième signal de réponse au troisième dispositif électronique (104).

3. Système selon la revendication 1, **caractérisé en ce qu'**il comprend en outre :
un quatrième dispositif électronique (101, 102, et 103) comprenant une unité de communication (139a, 139b, et 139c) en mesure de communiquer sans fil dans la première bande de fréquences et une unité de communication (139a, 139b, et 139c) en mesure de communiquer sans fil dans la deuxième bande de fréquences,
dans lequel
le troisième dispositif électronique (104) transmet une troisième instruction au premier du premier dispositif électronique (101, 102, et 103) ou du deuxième dispositif électronique (101, 102, et 103),
le premier du premier dispositif électronique (101, 102, et 103) ou du deuxième dispositif électronique reçoit la troisième instruction et exécute un troisième test, le troisième test comprenant la transmission d'un troisième signal de test au quatrième dispositif électronique (101, 102, et 103) dans la première bande de fréquences,
le quatrième dispositif électronique reçoit le troisième signal de test et transmet un troisième signal de réponse au premier du premier dispositif électronique (101, 102, et 103) ou du deuxième dispositif électronique dans la première bande de fréquences, le troisième signal de réponse indiquant un succès ou un échec de la réception du troisième signal de test, et
le premier du premier dispositif électronique (101, 102, et 103) ou du deuxième dispositif électronique (101, 102, et 103) reçoit le troisième signal de réponse et transmet le troisième signal de réponse au troisième dispositif électronique (104).

4. Système selon la revendication 3, **caractérisé en ce que**
le troisième dispositif électronique (104) reçoit le troisième signal de réponse et transmet une quatrième instruction au premier du premier dispositif électronique (101, 102, et 103) ou du deuxième dispositif électronique (101, 102, et 103) lorsque le troisième signal de réponse indique un échec de la réception du troisième signal de test,
le premier du premier dispositif électronique (101, 102, et 103) ou du deuxième dispositif électronique reçoit la quatrième instruction et exécute un quatrième test, le quatrième test comprenant la transmission d'un quatrième signal de test au deuxième du premier dispositif électronique (101, 102, et 103) ou du deuxième dispositif électronique dans la deuxième bande de fréquences,
le deuxième du premier dispositif électronique (101, 102, et 103) ou du deuxième dispositif électronique reçoit le quatrième signal de test et transmet un quatrième signal de réponse au premier du premier dispositif électronique (101, 102, et 103) ou du deuxième dispositif électronique dans la deuxième bande de fréquences, le quatrième signal de réponse indiquant un succès ou un échec de la réception du quatrième signal de test, et
le premier du premier dispositif électronique (101, 102, et 103) ou du deuxième dispositif électronique (101, 102, et 103) reçoit le quatrième signal de réponse et transmet le quatrième signal de réponse au troisième dispositif électronique (104).

5. Système selon la revendication 1, **caractérisé en ce que**
le troisième dispositif électronique (104) transmet une instruction pour mettre à jour le premier test au premier du premier dispositif électronique (101, 102, et 103) ou du deuxième dispositif électronique (101, 102, et 103), et
le premier du premier dispositif électronique (101, 102, et 103) ou du deuxième dispositif électronique (101, 102, et 103) reçoit l'instruction de mise à jour et met à jour le premier test sur la base de l'instruction de mise à jour.

6. Système selon la revendication 1, **caractérisé en ce qu'**il comprend en outre :
un cinquième dispositif électronique (105) qui transmet un contenu du premier test au troisième dispositif électronique (104),
dans lequel
le troisième dispositif électronique (104) reçoit le contenu du premier test et transmet une instruction pour mettre à jour le premier test au premier du premier dispositif électronique (101, 102, et 103) ou du deuxième dispositif électronique (101, 102, et 103) sur la base du contenu reçu du premier test.

7. Système selon la revendication 1, **caractérisé en ce que**
la première bande de fréquences est une bande de 2,4 GHz et la deuxième bande de fréquences est une bande de 868 MHz.

8. Système selon la revendication 1, **caractérisé en ce que**
chacun du premier dispositif électronique (101, 102, et 103) et du deuxième dispositif électronique (101, 102, et 103) comprend en outre une batterie rechargeable (124a, 124b, et 124c).

9. Système selon la revendication 8, **caractérisé en ce que**
chacun du premier dispositif électronique (101, 102, et 103) et du deuxième dispositif électronique (101, 102, et 103) comprend une unité d'éclairage (113a, 113b, et 113c) qui éclaire dans un mode d'éclairage correspondant à un état de charge de la batterie rechargeable (124a, 124b, et 124c).

10. Système selon la revendication 1, **caractérisé en ce qu'**il comprend en outre :
un sixième dispositif électronique (105) qui reçoit le premier signal de réponse à partir du premier du premier dispositif électronique (101, 102, et 103) ou du deuxième dispositif électronique (101, 102, et 103) et télécharge le premier signal de réponse vers un serveur (106).

11. Système selon la revendication 10, **caractérisé en ce que**
le troisième dispositif électronique (104) télécharge le premier signal de réponse vers le serveur (106).

12. Système selon la revendication 1, **caractérisé en ce que**
au moins un du premier dispositif électronique (101, 102, et 103) ou du deuxième dispositif électronique (101, 102, et 103) comprend une unité d'éclairage (112a, 112b, et 112c) qui éclaire dans un premier mode d'éclairage pendant que le premier test est en cours d'exécution et éclaire dans un deuxième mode d'éclairage lorsque l'exécution du premier test est terminée.

13. Système selon la revendication 1, **caractérisé en ce que**
au moins un du premier dispositif électronique (101, 102, et 103) ou du deuxième dispositif électronique (101, 102, et 103) comprend une unité d'éclairage (112a, 112b, et 112c) qui éclaire dans un premier mode d'éclairage pendant que le premier test est en cours d'exécution, qui éclaire dans un deuxième mode d'éclairage lorsque le premier signal de réponse indique un succès de la réception du premier signal de test, et qui éclaire dans un troisième mode d'éclairage lorsque le premier signal de réponse indique un échec de la réception du premier signal de test.

14. Dispositif électronique comprenant une unité de communication (139a, 139b, et 139c) en mesure de communiquer sans fil dans une première bande de fréquences et une deuxième bande de fréquences,
**caractérisé en ce que**
le dispositif électronique est configuré pour être défini comme un dispositif initiateur ou un dispositif de balise ;
le dispositif électronique (101) défini comme le dispositif initiateur est configuré pour exécuter un premier test, lors de la réception d'une première instruction à partir d'un dispositif de commande (104), le premier test comprenant la transmission d'un premier signal de test au dispositif électronique (102, 103) défini comme le dispositif de balise dans la première bande de fréquences ;
le dispositif électronique (101) défini comme le dispositif initiateur est configuré pour transmettre un signal de réponse au dispositif de commande (104), lors de la réception du signal de réponse à partir du dispositif électronique (102, 103) défini comme le dispositif de balise dans la première bande de fréquences, le signal de réponse indiquant un succès ou un échec de la réception du premier signal de test par le dispositif électronique (102, 103) défini comme le dispositif de balise ; et
le dispositif électronique (101) défini comme le dispositif initiateur est configuré pour exécuter un deuxième test, lors de la réception d'une deuxième instruction à partir du dispositif de commande (104), le deuxième test comprenant la transmission d'un deuxième signal de test au dispositif électronique (102, 103) défini comme le dispositif de balise dans la deuxième bande de fréquences.

15. Procédé de test pour un système comprenant :
un premier dispositif électronique (101, 102, et 103) comprenant une unité de communication (139a, 139b, et 139c) en mesure de communiquer sans fil dans une première bande de fréquences et une deuxième bande de fréquences ;
un deuxième dispositif électronique (101, 102, et 103) comprenant une unité de communication (139a, 139b, et 139c) en mesure de communiquer sans fil dans une première bande de fréquences et une deuxième bande de fréquences ; et
un troisième dispositif électronique (104),
le procédé de test étant **caractérisé par**
la transmission d'une instruction par le troisième dispositif électronique (104) à un premier du premier dispositif électronique (101, 102, et 103) ou du deuxième dispositif électronique (101, 102, et 103),
l'exécution d'un test par le premier du premier dispositif électronique (101, 102, et 103) ou du deuxième dispositif électronique, le test comprenant la transmission d'un signal de test à un deuxième du premier dispositif électronique (101, 102, et 103) ou du deuxième dispositif électronique (101, 102, et 103) dans la première bande de fréquences après la réception de l'instruction,
la transmission d'un signal de réponse par le deuxième du premier dispositif électronique (101, 102, et 103) ou du deuxième dispositif électronique (101, 102, et 103) au premier du premier dispositif électronique (101, 102, et 103) ou du deuxième dispositif électronique dans la première bande de fréquences après la réception du signal de test, le signal de réponse indiquant un succès ou un échec de la réception du signal de test, et
la transmission du signal de réponse par le premier du premier dispositif électronique (101, 102, et 103) ou du deuxième dispositif électronique (101, 102, et 103) au troisième dispositif électronique (104) après la réception du signal de réponse.
